(19)

**Europäisches Patentamt**
**European Patent Office**
**Office européen des brevets**

(11) **EP 4 641 420 A1**

(12) **EUROPEAN PATENT APPLICATION**

(43) Date of publication:
**29.10.2025 Bulletin 2025/44**

(21) Application number: **24171942.6**

(22) Date of filing: **23.04.2024**

(51) International Patent Classification (IPC):
**G06F 21/60** (2013.01)        **G06F 21/78** (2013.01)
**H04L 9/06** (2006.01)        **H04L 9/32** (2006.01)

(52) Cooperative Patent Classification (CPC):
**G06F 21/60; G06F 21/78; H04L 9/0631;**
**H04L 9/0894**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Nagravision Sàrl**
**1033 Cheseaux-sur-Lausanne (CH)**

(72) Inventors:
• **VILLEGAS, Karine**
  **1033 Cheseaux-sur-Lausanne (CH)**

• **MACCHETTI, Marco**
  **1033 Cheseaux-sur-Lausanne (CH)**
• **CAMUSSI, Claude**
  **1033 Cheseaux-sur-Lausanne (CH)**
• **GROUX, Cédric**
  **1033 Cheseaux-sur-Lausanne (CH)**
• **FER, François**
  **1033 Cheseaux-sur-Lausanne (CH)**
• **ROUAULT, Jean-Philippe**
  **1033 Cheseaux-sur-Lausanne (CH)**

(74) Representative: **Parker, Andrew James**
**Meissner Bolte Partnerschaft mbB**
**Patentanwälte Rechtsanwälte**
**Postfach 86 06 24**
**81633 München (DE)**

(54) **PROCESSING OF DATA IN A SECURE ENVIRONMENT**

(57)     A computer-implemented method, executed within a secure environment, comprises: receiving input data comprising a message, the message comprising N message portions, where N is greater than or equal to 1; initializing a cryptographic function by retrieving, selecting or generating initial state data, the cryptographic function comprising a message processing phase (MPP); applying a first stage of the MPP of the cryptographic function, wherein applying the first stage of the MPP of the cryptographic function comprises: applying a first MPP obfuscation function to a first MPP obfuscation function input to generate a first obfuscated MPP input, the first MPP obfuscation input derived from a received message portion; and applying a first MPP function to a first MPP function input derived from the first obfuscated MPP input and the initial state data of the encryption function to generate a first MPP output.

Message processing phase - encryption

Fig. 9

① First portion of 1st MPP function input
② Second portion of 1st MPP function input
③ First portion of nth MPP function input
④ Second portion of nth MPP function input

**Description**

TECHNICAL FIELD OF THE INVENTION

The present invention relates to a computer-implemented method of processing input data within a secure environment, for example encrypting input data for storage outside the secure environment or decrypting encrypted input data. Computer-implemented methods of decrypting data are also provided, as are corresponding hardware implementations.

BACKGROUND TO THE INVENTION

Systems-on-chip (SOC) which execute critical operations often require a secure enclave which provides security functions. Herein, the term "secure enclave" is used to refer to a component or set of components which are compliant with certain security certifications such as the Secure Evaluation Standard for Internet of Things (IoT) Platforms, or SESIP. The SESIP security certification requires that the component or set of components within the secure enclave be resistant against physical attacks such as side-channel attacks and fault attacks.

An example of a security function which a secure enclave may be required to provide is secure storage. In order to provide secure storage, the component or set of components in the secure enclave must be able to ensure robust encryption or authenticated encryption of the data to be stored securely. This is necessary because the data is generally stored outside the secure enclave, so must be robustly encrypted to avoid access by malicious actors. It is also desirable for the secure enclave to enable the secure storage with small costs with respect to hardware gates and software code.

Existing solutions are based on the Advanced Encryption Standard (AES), but it is generally expensive to achieve the robust security requirements in a system that respects performance requirements. The present invention has been devised in light of these issues.

SUMMARY OF THE INVENTION

At a high level, the present invention provides a computer-implemented method of processing input data using a cryptographic function comprising a sponge duplex construction, where portions of the input data, and optionally other cryptographic data such as a key and other associated data, are passed through an obfuscation layer before entering the sponge duplex construction of the cryptographic function. Alternatively put, an obfuscation function is applied to portions of the input data before the portions of the input data enter the sponge duplex construction.

More specifically, a first aspect of the present invention provides a computer-implemented method, executed within a secure environment, of processing input data.

The computer-implemented method may comprise: receiving input data comprising a message, the message comprising $N$ message portions, where $N$ is greater than or equal to 1; initializing a cryptographic function by retrieving or generating initial state data, the cryptographic function comprising a message processing phase (MPP); applying a first stage of the MPP of the cryptographic function, wherein applying the first stage of the MPP of the cryptographic function comprises: applying a first MPP obfuscation function to a first MPP obfuscation function input to generate a first obfuscated MPP input, the first MPP obfuscation input derived from a received message portion; and applying a first MPP function to a first MPP function input derived from the first obfuscated MPP input and the initial state data of the encryption function to generate a first MPP output.

The message may be a cryptographic key. This is not to be confused with the cryptographic key which is received and is used during the cryptographic key processing phase of the cryptographic function, discussed later. It is important that cryptographic keys are stored securely, because if a malicious actor is able to access one, they are able, for example, to imitate another party without being detected. Thus, encryption and decryption of cryptographic keys are important envisaged applications of the computer-implemented method of the present invention. Alternatively, the message could be another kind of key which provides, for example, access to a device, or access to e.g. debug/test modes of a device.

Herein, the term "message" is used to refer to a main body of the input data, or a payload of the input data, to distinguish it from e.g. metadata, associated data, or a cryptographic key which is used during a secure encryption or decryption process. As discussed in detail later in this application, the computer-implemented method of the first aspect of the present invention may be used for encryption or decryption of data. The message may therefore comprise data to be encrypted, or may comprise encrypted data to be decrypted. Thus, the "message processing phase" or "MPP" is a subset of the cryptographic function during which operations are executed on portions of the message, or message portions. The cryptographic function may alternatively be referred to as a cryptographic algorithm. The message processing phase of the cryptographic function may have a sponge duplex construction, but other phases of the cryptographic function may have a different construction, such as a regular sponge construction. The alternative structures are explained in more detail later in this disclosure.

As discussed, computer-implemented methods of the present invention may be employed to encrypt data which is to be stored outside the secure environment. Accordingly, computer-implemented methods of the first aspect of the present invention may further comprise receiving, at the secure environment, a request to encrypt input data for storage outside the secure environment. The request may comprise the input data (which itself may comprise the message and optionally the associated data). When the computer-implemented method is a computer-implemented method of encrypting data to be stored outside the secure environment, each of the N processed output data portions may correspond to a respective encrypted message portion. More specifically, each of the N processed output data portions may correspond to an encrypted message portion, the message portion being the message portion on using which the respective processed output data portion is derived or otherwise generated, as outlined earlier in this disclosure. Then, the processed output data, generated by combining the N processed output data portions, may correspond to the encrypted message.

Conversely, computer-implemented method of the present invention may be employed to decrypt encrypted data which has been stored outside the secure environment. For example, the computer-implemented method may be employed to decrypt data which has been encrypted as discussed in the previous paragraphs. Accordingly, the computer-implemented method may further comprise receiving a request to decrypt input data stored outside the secure environment, the input data being encrypted input data. The request may comprise the input data (which itself may comprise the message, and optionally the associated data described later). In these cases, the message is an encrypted message, and the message portions are encrypted message portions.

When the computer-implemented method is a computer-implemented method of decrypting input data which was encrypted as outlined herein, the structure of the cryptographic function must be the same for both the encryption and decryption operations. In particular, the same obfuscation functions may be used, the same cryptographic key may be used, the same MPP functions may be used, the same CKPP functions may be used, the same ADPP functions may be used, and the same TGP functions may be used. The logical combination functions which are deployed throughout application of the cryptographic function may also be the same.

Typically, when a cryptographic function having a sponge construction or a sponge duplex construction (i.e. like the cryptographic function employed in implementations of the present invention) is applied to input data, the initial state data is set to zero, i.e. all of the bits of the initial state data are set to zero. However, in some implementations of the present invention, the initial state which is retrieved or generated may depend on the received request. For example, the retrieved or generated initial state data may depend on one or more of the following: received associated data, an identity of a client from whom (or from which) the request is received; a type of input data; a time and/or date at which the request is received; access rights of the client from which (or from which) the request is received; and/or the life cycle state of a device. In other cases, the computer-implemented method may comprise randomly generating the initial state data.

In order to determine the initial state data, based on one or more of the factors outlined above, the computer-implemented method may further comprise executing a search in a lookup table, the lookup table storing associations between data indicative of the factors outlined in the previous paragraph (e.g. user identifiers, input data type identifiers, data indicative of access rights), and a plurality of sets of initial state data. The lookup table may be stored in the secure environment. In response to identifying the initial state data based on the search, initializing the cryptographic function may comprise retrieving the identified initial state data, e.g. from a database stored in the secure environment. In those implementations in which the input data comprises associated data, the initial state data may be generated or retrieved based on the associated data, in the same manner.

The processed output data may comprise N processed output data portions. The first portion may be based on the first MPP output. For example, the first portion of the processed output data may comprise a portion of the first MPP output.

As discussed, according to the computer-implemented method of the first aspect of the invention, a first obfuscation function is applied to the first message portion. The application of the obfuscation function introduces an additional layer of security. More specifically, the presence of obfuscation functions improves the resistance of the cryptographic function to side channel attacks, and hence makes it more difficult for an attacker to ascertain the internal state of the cryptographic function, and the data being processed.

The obfuscation functions may be stored within the secure environment. Accordingly, the computer-implemented method may further comprise retrieving one or more obfuscation functions from a repository within the secure environment, e.g. a secure repository.

The purpose of the obfuscation functions used throughout the computer-implemented method of the present invention is to introduce secret data into the computation. More specifically, the obfuscation functions may be configured to introduce data into the respective obfuscation input (e.g. the first to $M^{th}$ CKPP obfuscation inputs, the first to $P^{th}$ ADPP obfuscation inputs, and/or the first to $N^{th}$ MPP obfuscation inputs). In this manner, the "real" data which forms those obfuscation inputs is cloaked, concealed, or otherwise obfuscated. This provides security against side channel attacks.

The obfuscation functions may be bijective functions, i.e. one-to-one mappings. More specifically, the obfuscation functions may be inversible bijective functions, i.e. an inverse function can be applied to the output of the obfuscation function in order to retrieve the original data. By using bijective inversible functions as the obfuscation functions, it is straightforward to construct mask correction functions which may be employed during decryption operations (discussed in detail later in this disclosure).

We now discuss some examples of obfuscation functions which may be used as the obfuscation functions in various implementations of the computer-implemented method of the first aspect of the invention:

- Applying an obfuscation function may comprise applying a logical combination function such as an XOR function to the obfuscation input and secret obfuscation data. The secret obfuscation data may be predetermined secret obfuscation data which is stored on a memory in the secure environment. Alternatively, the method may comprise generating or retrieving the secure obfuscation data, e.g. in the same manner that the initial state data or cryptographic key may be generated or retrieved (described elsewhere in this disclosure). The obfuscation function applied at each stage of the cryptographic function may be the same (e.g. the respective obfuscation input may be logically combined with the same secret obfuscation data), or the obfuscation function applied at each stage of the cryptographic function may be different (e.g. at each stage, the respective obfuscation input is logically combined with different respective secret obfuscation data).

- Applying an obfuscation function may comprising applying a secret substitution table (alternatively referred to as a substitution box or S-box) to the obfuscation input. In a substitution table, each block of bits (e.g. 4 bits or 8 bits) of the input is substituted with a corresponding block of bits (usually, but not necessarily, having the same size as the input block of bits), based on a mapping defined in a table (i.e. the substitute table). The secret substitution table may be a predetermined secret substitution table stored in a memory in the secure environment. Alternatively, the method may comprise generating or retrieving the secret substitution table, e.g. in the same manner that the initial state data or cryptographic key may be generated or retrieved (described elsewhere in this disclosure). The obfuscation function applied at each stage of the cryptographic function may be the same (e.g. the same substitution table may be used for each obfuscation input), or the obfuscation function applied at each stage of the cryptographic function may be different (e.g. at each stage, a different respective secret substitution table is applied to the respective obfuscation input).

- Applying an obfuscation may comprise applying a bit permutation function to the obfuscation input. The permutation function may be the same as the functions used as e.g. the first to $M^{th}$ CKPP functions, the first to $P^{th}$ ADPP functions, the first to $N^{th}$ MPP functions, and/or the first to $Q^{th}$ TGP functions. The obfuscation function applied at each stage of the cryptographic function may be the same (e.g. the same bit permutation function may be applied each obfuscation input), or the obfuscation function applied at each stage of the cryptographic function may be different (e.g. at each stage, a different respective bit permutation function is applied to the respective obfuscation input).

- Applying an obfuscation function may comprise applying any combination of the functions outlined in the preceding bullet points.

In some cases, the message may comprise a plurality of $N$ message portions, i.e. the value of $N$ may be greater than one. The message portions may each be the same size (i.e. the same bit length), and in particular may each be the same predetermined size. In implementations in which the message is not an integer multiple of the predetermined bit length, the computer-implemented method may comprise applying a padding function to the message, the padding function configured to modify the length of the message to be an integer multiple of the predetermined bit length. The computer-implemented method may then comprise generating the $N$ message portions by dividing the modified length message into a plurality of $N$ message portions, each having the same predetermined bit length. The predetermined bit length may be the bit rate R, explained later in this application.

In other cases, the obfuscation functions may be configured to modify the length of the message portions to have the predetermined bit length which may be the bit rate R, as well as obfuscating the message portions.

When the message comprises a plurality of $N$ message portions, the computer-implemented method may further comprise, after applying the first stage of the MPP of the cryptographic function, applying a further ($N$ - 1) stages of the MPP of the cryptographic function. Each of the further ($N$ - 1) stages of the MPP of the cryptographic function maybe applied to a respective MPP obfuscation function input derived from a respective message portion of the remaining ($N$ - 1) message portions. In this way, it is possible to ensure that the whole of the message is e.g. encrypted, decrypted, or otherwise processed. For $1 < n \leq N$, applying an $n^{th}$ stage of the MPP of the cryptographic function comprises: applying an $n^{th}$ MPP obfuscation function to an $n^{th}$ MPP obfuscation function input to generate an $n^{th}$ obfuscated MPP input; and applying an $n^{th}$ MPP function to an $n^{th}$ MPP function input derived from the $m^{th}$ obfuscated MPP input and an $(n-1)^{th}$ MPP output, to generate an $n^{th}$ MPP output.

The first MPP obfuscation function input may comprise or be the first message portion. More generally, the $n^{th}$ MPP obfuscation function input may comprise or be the $n^{th}$ message portion. This is the case especially when the cryptographic function is used to encrypt a message.

In alternative cases, the first MPP obfuscation function input may be derived from the first message portion and either the initial state data or an output of an earlier stage of the cryptographic function (specifically from an $M^{th}$ CKPP output or a $P^{th}$ ADPP output, described in more detail later in this disclosure). For example, the first MPP obfuscation function input may be derived by applying a logical combination function to the first message portion and the initial state data, or an output of an earlier stage of the cryptographic function (specifically from an $M^{th}$ CKPP output or a $P^{th}$ ADPP output, described in more detail later in this disclosure). The logical combination function may be an XOR function[1]. The $n^{th}$ MPP obfuscation function input may be derived from the $n^{th}$ message portion and the $(n-1)^{th}$ MPP output. For example, the $n^{th}$ MPP obfuscation function input may be derived by applying a logical combination function to the $n^{th}$ message portion and the $(n-1)^{th}$ MPP output. The logical combination function may be an XOR function. This is the case especially when the cryptographic function is used to decrypt a message. In these cases, the $n^{th}$ MPP obfuscation input may be equivalent to a decrypted version of the $n^{th}$ (encrypted) message portion.

[1] An XOR function is configured to compare two bits, one from each input, and to output a first value (e.g. "0" or "FALSE") if the two bits are different, and to output a second value (e.g. "1" or "TRUE") if the two bits are identical.

In those cases where the computer-implemented method of the present invention is used to decrypt an encrypted message in the form of an encrypted cryptographic key, it is desirable that the cryptographic key is never transmitted "in the clear", i.e. never transmitted in a non-encrypted state in which it could be intercepted by a malicious actor. In the context of the present invention, this corresponds to avoiding transmission of a decrypted message or message portions in the clear. Broadly, this can be achieved using masking, in which a mask is applied to data in order to conceal the true nature of the data.

In order to achieve this masking, the first MPP obfuscation function input may be derived from a masked first message portion and either the initial state data or an output of an earlier phase of the cryptographic function (specifically from an $M^{th}$ CKPP output or a $P^{th}$ ADPP output, described in more detail later in this disclosure). For example, the first MPP obfuscation function input may be derived by applying a logical combination function to a masked first message portion and the initial state data, or an output of an earlier phase of the cryptographic function (specifically from an $M^{th}$ CKPP output or a $P^{th}$ ADPP output, described in more detail later in this disclosure). The logical combination function may be an XOR function. The $n^{th}$ MPP obfuscation function input may be derived from a masked $n^{th}$ message portion and the $(n-1)^{th}$ MPP output. For example, the $n^{th}$ MPP obfuscation function input may be derived by applying a logical combination function to the $n^{th}$ message portion and the $(n-1)^{th}$ MPP output. The logical combination function may be an XOR function.

Accordingly, the computer-implemented method may comprise generating the masked first to $N^{th}$ message portions. Generating a masked $n^{th}$ message portion may comprise applying a respective $n^{th}$ cryptographic mask to the $n^{th}$ message portion. Applying a cryptographic mask to the message portion may comprise applying a logical combination function to the cryptographic mask and the message portion. The logical combination function may be an XOR function. The cryptographic mask applied to each $n^{th}$ message portion may be the same, or a different cryptographic mask may be applied to each respective $n^{th}$ message portion.

The first to $N^{th}$ MPP obfuscation functions may be identical, i.e. the same MPP obfuscation function may be applied to each of the message portions at successive stages of the MPP of the cryptographic function.

By the nature of each stage of the MPP of the cryptographic function, the MPP of the cryptographic function may be considered to have a sponge duplex construction, because an input is received at each stage, and an output is generated. The output is then used to feed the next stage of the MPP of the cryptographic function.

It should be noted that, while we refer to applying e.g. $N$ stages of the MPP of the cryptographic function, this does not mean that the MPP of the cryptographic function has a fixed number (i.e. $N$) stages. Rather, the number of stages of the MPP of the cryptographic function which are applied is variable, and depends on the size, and more specifically the number of message portions of the message, i.e. $N$. In more detail, an $n^{th}$ stage of the cryptographic function is applied for a respective message portion of the $N$ message portions. The MPP of the cryptographic function may cease to be applied once all $N$ message portions have been input into the MPP of the cryptographic function.

The first to $N^{th}$ MPP functions may be identical, i.e. the same MPP function may be applied to each of the MPP function inputs at successive stages of the MPP of the cryptographic function. The MPP functions may be MPP permutation functions such as fixed length permutation functions. The permutation function may be a Keccak-f or Keccak-p permutation function. The Keccak-f permutations are defined in The Keccak Reference[2]. The Keccak-p permutations are

[2] Bertoni, Daemen, Peeters, Van Assche (2011), "The Keccak Reference" available at: https://keccak.team/files/Keccak-reference-3.0.pdf defined in the FIPS 202 standard, section 3[3]. Alternatively AES or SHA-2 may be used as pseudo-random permutation functions.

[3] FIPS 202 - "SHA-3 standard: Permutation-Based Hash and Extendable-Output Functions"

The first to $N^{th}$ MPP functions may take an input having a predetermined length $8$, and may generate an output having the same length $B$. Therefore, the first to $N^{th}$ MPP function inputs may have length $B$. Herein, the term "length" is used to refer to the length of a string or piece of data (e.g. the initial state data, the message, and the message portions) in bits. This is the commonly understood meaning of "length" in this context. The initial state data may have length $B$.

In order to provide an increased degree of security against certain attacks, the first MPP function input may comprise a first portion having a length $R$ (where $R$ may be referred to as the rate or bitrate of the MPP of the cryptographic function) which is derived from the first obfuscated MPP input and the initial state data, and a second portion having a length $C$ (where $C$ may be referred to as the capacity of the MPP of the cryptographic function) which is not derived from the first obfuscated MPP input. For completeness:

$$B = R + C$$

The security of the cryptographic function may be improved by increasing the capacity C relative to the bitrate R. Alternatively, the speed of the cryptographic function can be increased by increase the bitrate R relative to the capacity C. In typical implementations, there is a trade-off between the two.

By virtue of the fact that only part of the input to the MPP function is derived from a message portion (i.e. from the first obfuscated MPP input), an additional level of security is applied.

We now discuss the structure of the first MPP function input, and its derivation from the first MPP obfuscated input and the initial state data in more detail.

The MPP of the cryptographic function may take, as an input, MPP input data. The MPP input data may be the initial state data, or may be derived from the initial state data. An explanation of implementations in which the MPP input data is derived from the initial state data is set out later in this disclosure.

The MPP input data may have length $8$, and may be divided into a first portion having length $R$ and a second portion having length $C$. The first obfuscated MPP input may also have length $R$. As outlined earlier, this may be by virtue of a padding function being used to ensure that the message portions each have a predetermined bit length, or because the obfuscation functions are such that their outputs are always of length R.

Generating the first portion of the first MPP function input, having length R, may comprise combining the first portion of the MPP input data and the first obfuscated MPP input. Combining the first portion of the MPP input data and the first obfuscated MPP input may comprise applying a logical combination function to the first portion of the MPP input data and the first obfuscated MPP input, the logical combination function optionally configured to receive two inputs having an identical length (in this case $R$), and to generate an output having the same length (again, in this case $R$). The logical combination function may be an XOR function. In those cases in which a first masked message portion is used to generate the first MPP obfuscation function input, generating the first portion of the first MPP function input may further comprise applying a first mask correction function to the result of the logical combination function, the mask correction function configured to remove the effect of the mask before application of the first MPP function, in order to ensure the correctness of the computation. Applying the mask correction function may comprise first applying an inverse to the first MPP obfuscation function in order to undo the effects of the obfuscation function. Then, an unmasking function may be applied to remove the effects of the first mask (when the mask is applied by XOR'ing the first message portion with the mask, the unmasking function may be an XOR combination with the mask). Then, the first MPP obfuscation function may be reapplied to obtain the first MPP function input.

Alternatively, a first mask correction function may be applied before the application of the first MPP obfuscation function.

Generating the first MPP function input may then comprise combining the first portion of the first MPP function input, derived as outlined above, with the second portion of the MPP input data. Because the first portion of the first MPP function input has length $R$, and the second portion of the MPP input data has length $C$, a combination of the two has length $B$. Combining the first portion of the first MPP function input with the second portion of the MPP input data may comprise concatenating the first portion of the first MPP function input and the second portion of the MPP input data.

Similarly, in order to provide an increased degree of security against certain attacks, the each of the subsequent $(N-1)$ MPP function inputs (i.e. the second to the $N^{th}$ MPP function inputs) may also comprise a first portion having a length $R$ which is derived from the $n^{th}$ obfuscated MPP input and the $(n-1)^{th}$ MPP output, and a second portion having a length $C$ which is not derived from the $n^{th}$ obfuscated MPP input. As before, by virtue of the fact that only part of the input to the MPP function is derived from a message portion (i.e. from the $n^{th}$ obfuscated MPP input), an additional level of security is applied.

We now discuss the structure of the subsequent $(N-1)$ MPP function inputs, and their derivation.

A general $n^{th}$ stage of the MPP of the cryptographic function may take as an input the data output from the previous stage of the MPP of the cryptographic function. More specifically, a general $n^{th}$ stage of the MPP of the cryptographic function may have an input comprising the $(n-1)^{th}$ MPP output data. The $(n-1)^{th}$ MPP output data may have length $B$, and may be divided into a first portion having length $R$ and a second portion having length $C$. Like the first obfuscated MPP input, the general $n^{th}$ obfuscated MPP input may also have length $R$.

Generating the first portion of the $n^{th}$ MPP function input, having length $R$, may comprise combining the first portion of the $(n-1)^{th}$ MPP output and the $n^{th}$ MPP obfuscated input, which may comprise applying a logical combination function to the first portion of the $(n-1)^{th}$ MPP output and the $n^{th}$ MPP obfuscated input, the logical combination function optionally configured to receive two inputs having an identical length (in this case $R$), and to generate an output having the same length (again, in this case $R$). The logical combination function may be an XOR function. In those cases in which an $n$th masked message portion is used to generate the $n$th MPP obfuscation function input, generating the first portion of the $n$th MPP function input may further comprise applying an $n$th mask correction function to the result of the logical combination function, the mask correction function configured to remove the effect of the mask before application of the first MPP function, in order to ensure the correctness of the computation. Applying the mask correction function may comprise first applying an inverse to the $n$th MPP obfuscation function in order to undo the effects of the obfuscation function. Then, an unmasking function may be applied to remove the effects of the mask (when the mask is applied by XOR'ing the $n$th message portion with the $n$th mask, the unmasking function may be an XOR combination with the mask). Then, the $n$th MPP obfuscation function may be reapplied to obtain the $n$th MPP function input.

Alternatively, in the $n$th stage of the MPP, an $n$th mask correction function may be applied before the application of the $n$th MPP obfuscation function.

Generating the $n$th MPP function input may then comprise combining the first portion of the $n$th MPP function input, derived as outlined above, with the second portion of the $(n\text{-}1)$th MPP output. Because the first portion of the $n$th MPP function input has length $R$, and the second portion of the $(n\text{-}1)$th MPP output has length $C$, a combination of the two has length $B$. Combining the first portion of the $n$th MPP function input with the second portion of the $(n\text{-}1)$th MPP output may comprise concatenating the first portion of the $n$th MPP function input and the second portion of the $(n\text{-}1)$th MPP output.

We now discuss the outputs of the MPP of the cryptographic function.

The computer-implemented method of the first aspect of the invention may comprise generating processed output data. The processed output data may comprise $N$ processed output data portions, optionally each corresponding to a respective message portion. A first processed output data portion may be derived from the MPP input data (defined previously as, for example, initial state data or an output of a previous stage of the MPP of the cryptographic function) and the first message portion. For example, the first processed output data portion may be derived by applying a logical combination function to the first message portion and a portion of the MPP input data. The first processed output data portion may take this form particularly when the computer-implemented method of the first aspect of the invention is used to encrypt a message, in which case the first processed data output corresponds to a first portion of an encrypted message.

Preferably, the first processed output data portion may be derived by applying a logical combination function to the first message portion and a portion of the MPP input data having the same length as the first message portion. The length may be $R$, and may be the first $R$ bits of the MPP input data.

Generally, the remaining $(N\text{ - }1)$ processed output data portions may be derived by applying a logical combination function to the $n$th message portion and a portion of the $(n\text{-}1)$th MPP output. The $n$th processed output data portion may take this form particularly when the computer-implemented method of the first aspect of the invention is used to encrypt a message, in which case the $n$th processed data output corresponds to an $n$th portion of an encrypted message.

Because the first processed output data is generated from an MPP input, and the subsequent $(N\text{ - }1)$ processed output data portions are generated from an $(n\text{-}1)$th MPP output, there are $N$ total processed output data portions. It will be noted that the $N$th MPP output may not be used to generate a processed output data portion (but may be used to generate a tag, see later in this disclosure).

The logical combination function may be an XOR function.

When the computer-implemented method of the first aspect of the invention is used to decrypt a message, the $n$th processed output data portion may comprise or be the $n$th MPP obfuscation input, which one will recall is a decrypted version of an $n$th (encrypted) message portion. Or, the first processed output data portion may comprise or be the output from a previous stage of the cryptographic function, e.g. the initial state data, the $M$th CKPP output, or the $P$th ADPP output (explained later in this disclosure). And, the $n$th processed output data portion may comprise or be the $(n\text{-}1)$th MPP output.

The computer-implemented method may further comprise combining the $N$ processed output data portions to generate processed output data. For example, combining the $N$ processed output data portions may comprise concatenating the $N$ processed output data portions to generate the processed output data. The processed output data may be in the form of an encrypted or decrypted message, on which more later.

For added security, particularly but not exclusively in those implementations where the computer-implemented method is used to decrypt an encrypted message in the form of an encrypted cryptographic key, the computer-implemented method may comprise masking each of the $N$ processed output data portions, e.g. before combining them. The processed output data may further comprise, in those cases, masked versions of each of the message portions, too.

In addition to the message processing phase or MPP, the cryptographic function may further comprise a cryptographic key processing phase or CKPP. In such cases, the computer-implemented method may further comprise receiving a cryptographic key, the cryptographic key comprising $M$ cryptographic key portions, where *M* is greater than or equal to 1. The cryptographic key may be an encryption key or a decryption key. The cryptographic key may be configured to guarantee bit entropy.

In some cases, the cryptographic key maybe selected based on the received request. The computer-implemented method may comprise retrieving or generating the cryptographic key, wherein the cryptographic key is retrieved or generated based on the received request. For example, the retrieved or generated cryptographic key may depend on one or more of the following: received associated data, an identity of a client from whom (or from which) the request is received; a type of input data; a time and/or date at which the request is received; access rights of the client from which (or from which) the request is received; and/or the life cycle state of a device. In other cases, the computer-implemented method may comprise randomly generating the cryptographic key.

In order to determine the cryptographic key, based on one or more of the factors outlined above, the computer-implemented method may further comprise executing a search in a lookup table, the lookup table storing associations between data indicative of the factors outlined in the previous paragraph (e.g. user identifiers, input data type identifiers, data indicative of access rights), and a plurality of cryptographic keys. The lookup table may be stored in the secure environment. In response to identifying the cryptographic key based on the search, initializing the cryptographic function may comprise retrieving the identified cryptographic key, e.g. from a database stored in the secure environment. In those implementations in which the input data comprises associated data, the cryptographic key may be generated or retrieved based on the associated data, in the same manner.

Cryptographic keys are typically 128-bit or 256-bit, but it will be appreciated that they can be of substantially any length.

By incorporating a cryptographic key into the processing of the input data, it is possible to encrypt the data in an authenticated manner, to ensure that any tampering with the output data generated in the MPP can be detected. In those implementations in which the cryptographic function comprises a cryptographic key processing phase (CKPP) and a message processing phase (MPP), the computer-implemented method may comprise applying the CKPP before applying the MPP. Accordingly, the MPP input data referred to previously may comprise or be an output of the CKPP.

Accordingly, the computer-implemented method of the first aspect of the invention may comprise applying a first stage of the CKPP of the cryptographic function, wherein applying the first stage of the CKPP of the cryptographic function comprises: applying a first CKPP obfuscation function to a first cryptographic key portion to generate a first obfuscated CKPP input; and applying a first CKPP function to a first CKPP function input derived from the first obfuscated CKPP input and the initial state data, to generate a first CKPP output.

In some cases, the cryptographic key may comprise a plurality of *M* cryptographic key portions, i.e. the value of *M* may be greater than one. In such cases, the computer-implemented method may further comprise, after applying the first stage of the CKPP of the cryptographic function, applying a further (*M* - 1) stages of the CKPP of the cryptographic function. Each of the further (*M* - 1) stages of the CKPP of the cryptographic function may be applied to a respective cryptographic key portion of the remaining (*M* - 1) cryptographic key portions. In this way, it is possible to ensure that the whole of the cryptographic key is processed. For $1 < m \leq M$, applying an $m^{th}$ stage of the CKPP of the cryptographic function comprises: applying an $m^{th}$ CKPP obfuscation function to an $m^{th}$ cryptographic key portion to generate an $m^{th}$ obfuscated CKPP input; and applying an $m^{th}$ CKPP function to an $m^{th}$ CKPP function input derived from the $m^{th}$ obfuscated CKPP input and an $(m-1)^{th}$ CKPP output, to generate an $m^{th}$ CKPP output.

As discussed previously, the MPP input data may be an output of the CKPP of the cryptographic function, or may comprise an output of the CKPP of the cryptographic function. More specifically, the MPP input data may be the $M^{th}$ CKPP output, or the MPP input data may comprise the $M^{th}$ CKPP output. It has been stated elsewhere that the first MPP function input is "derived" from the first MPP obfuscated input and the initial state data. In this context, the term "derived" is used broadly, to refer to the fact that the $M^{th}$ CKPP output is ultimately derived from the initial state data, via the CKPP of the cryptographic function.

The first to $M^{th}$ CKPP functions may take an input having a predetermined length *B',* and may generate an output having the same length *B'.* Therefore, the first to $M^{th}$ CKPP function inputs may have length *B'.* The initial state data may have length *B'.*

In order to provide an increased degree of security against certain attacks, the first CKPP function input may comprise a first portion having a length *R'* (where *R'* may be referred to as the rate or bitrate of the CKPP of the cryptographic function) which is derived from the first obfuscated CKPP input and the initial state data, and a second portion having a length *C'* (where *C'* may be referred to as the capacity of the CKPP of the cryptographic function) which is not derived from the first obfuscated CKPP input. For completeness:

$$B' = R' + C'$$

By virtue of the fact that only part of the input to the CKPP function is derived from a cryptographic key portion (i.e. from the first obfuscated CKPP input), an additional level of security is applied.

We now discuss the structure of the first CKPP function input, and its derivation from the first obfuscated CKPP input and the initial state data in more detail.

The CKPP of the cryptographic function may take as its input the initial state data.

The CKPP input data may have length $B'$, and may be divided into a first portion having length $R'$ and a second portion having length $C'$. The first obfuscated CKPP input may also have length $R'$. As outlined earlier, this may be by virtue of a padding function being used to ensure that the cryptographic key portions each have a predetermined bit length, or because the obfuscation functions are such that their outputs are always of length $R'$.

Generating the first portion of the first CKPP function input, having length $R'$, may comprise combining the first portion of the initial state data and the first obfuscated CKPP input. Combining the first portion of the initial state data and the first obfuscated CKPP input may comprise applying a logical combination function to the first portion of the initial state data and the first obfuscated CKPP input, the logical combination function optionally configured to receive two inputs having an identical length (in this case $R'$), and to generate an output having the same length (again, in this case $R'$). The logical combination function may be an XOR function.

Generating the first CKPP function input may then comprise combining the first portion of the first CKPP function input, derived as outlined above, with the second portion of the initial state data. Because the first portion of the first CKPP function input has length $R'$, and the second portion of the initial state data has length $C'$, a combination of the two has length $B'$. Combining the first portion of the first CKPP function input with the second portion of the initial state data may comprise concatenating the first portion of the first CKPP function input and the second portion of the initial state data.

Similarly, in order to provide an increased degree of security against certain attacks, the each of the subsequent ($M$ - 1) CKPP function inputs (i.e. the second to the $M^{th}$ CKPP function inputs) may also comprise a first portion having a length $R'$ which is derived from the $m^{th}$ obfuscated CKPP input and the $(m$-1$)^{th}$ CKPP output, and a second portion having a length C which is not derived from the $m^{th}$ obfuscated CKPP input. As before, by virtue of the fact that only part of the input to the CKPP function is derived from a cryptographic key portion (i.e. from the $m^{th}$ obfuscated CKPP input), an additional level of security is applied.

We now discuss the structure of the subsequent ($M$ - 1) CKPP function inputs, and their derivation.

A general $m^{th}$ stage of the CKPP of the cryptographic function may take as an input the data output from the previous stage of the CKPP of the cryptographic function. More specifically, a general $m^{th}$ stage of the CKPP of the cryptographic function may have an input comprising the $(m$-1$)^{th}$ CKPP output data. The $(m$-1$)^{th}$ CKPP output data may have length $B'$, and may be divided into a first portion having length $R'$ and a second portion having length $C'$. Like the first obfuscated CKPP input, the general $m^{th}$ obfuscated CKPP input may also have length $R'$.

Generating the first portion of the $m^{th}$ CKPP function input, having length $R'$, may comprise combining the first portion of the $(m$-1$)^{th}$ CKPP output and the $n^{th}$ MPP obfuscated input may comprise applying a logical combination function to the first portion of the $(m$-1$)^{th}$ CKPP output and the $m^{th}$ CKPP obfuscated input, the logical combination function optionally configured to receive two inputs having an identical length (in this case $R'$), and to generate an output having the same length (again, in this case $R'$). The logical combination function may be an XOR function.

Generating the $m^{th}$ CKPP function input may then comprise combining the first portion of the $m^{th}$ CKPP function input, derived as outlined above, with the second portion of the $(m$-1$)^{th}$ CKPP output. Because the first portion of the $m^{th}$ CKPP function input has length $R'$, and the second portion of the $(m$-1$)^{th}$ CKPP output has length $C'$, a combination of the two has length $B'$. Combining the first portion of the $m^{th}$ CKPP function input with the second portion of the $(m$-1$)^{th}$ CKPP output may comprise concatenating the first portion of the $m^{th}$ CKPP function input and the second portion of the $(m$-1$)^{th}$ CKPP output.

$R'$ may be the same as $R$. $C'$ may be the same as $C$. $B'$ may be the same as $B$. This enables the processing in the MPP of the cryptographic function and the CKPP of the cryptographic function effectively to be continuous, with the same obfuscation functions and CKPP/MPP functions to be used throughout.

The first to $M^{th}$ CKPP functions may be identical, i.e. the same CKPP function may be applied to each of the CKPP function inputs at successive stages of the CKPP of the cryptographic function. The CKPP functions may be CKMPP permutation functions, such as fixed length permutation functions. The permutation function may be a Keccak-f or Keccak-p permutation function. Alternatively AES or SHA-2 may be used as pseudo-random permutation functions. Furthermore, the first to $M^{th}$ CKPP functions may be the same as the first to $N^{th}$ MPP functions, i.e. the same function may be applied to each of the CKPP function inputs at successive stages of the CKPP of the cryptographic function, and to each of the MPP inputs at successive stages of the MPP of the cryptographic function.

The first to $M^{th}$ CKPP obfuscations functions may be identical, i.e. the same CKPP obfuscation function may be applied to each of the message portions at successive stages of the CKPP of the cryptographic function. Furthermore, the first to $M^{th}$ CKPP obfuscation functions may be the same as the first to $N^{th}$ MPP obfuscation functions, i.e. the same obfuscation function may be applied to each of the cryptographic key portions at successive stages of the CKPP of the cryptographic function, and to each of the message portions at successive stages of the MPP of the cryptographic function.

A key difference between the CKPP of the cryptographic function and the MPP of the cryptographic function is that the processed output data does not comprise, or is not based (directly) on the first to $M^{th}$ CKPP outputs generated during the successive stages of the CKPP of the cryptographic function. The processed output data is based only on the first to $(N-1)^{th}$ MPP outputs of the MPP of the cryptographic function and the $N$ message portions. The purpose of the CKPP is to introduce additional processing which enables the processed output data to be authenticated using the cryptographic key[4]. In order to do so, the cryptographic function may further comprise a tag generation phase (TGP), preferably after the MPP. Broadly, the tag generation phase is configured to generate an authentication tag which may be appended to the processed output data in order to enable a third party to authenticate the

[4] In the absence of the CKPP, the cryptographic function is able to serve as a function for e.g. encrypting data to generate a hash, or the like. The CKPP simply enables a user receiving the processed output data to authenticate that data. processed output data, e.g. to determine whether the processed output data has been tampered with. The tag generation phase of the cryptographic function is structurally simpler than the CKPP and the MPP, and may not take any external data (such as the message portions or the cryptographic key portions) as an input.

More specifically, the tag generation phase may be configured to generate a plurality of Q+1 tag portions, where Q is greater than or equal to 1. The first tag portion comprises or is a portion the $N^{th}$ MPP output having length $R_{tag}$. The computer-implemented method of the first aspect of the invention may further comprise applying a first stage of the TGP of the cryptographic function, wherein applying the first stage of the TGP of the cryptographic function comprises: outputting a first tag portion which comprises or is a portion the $N^{th}$ MPP output having length $R_{tag}$; and applying a first TGP function to a first TGP function input derived from the $N^{th}$ MPP output to generate a first TGP output.

The computer-implemented method may further comprise applying a further (Q - 1) stages of the TGP of the cryptographic function. For $1 < q \leq Q$, applying the $q^{th}$ stage of the TGP of the cryptographic function comprises: outputting a $q^{th}$ tag portion which comprises or is a portion of the $(q-1)^{th}$ TGP output having length $R_{tag}$; and applying a $q^{th}$ TGP function to an input derived from the $(q-1)^{th}$ TGP output to derive a $q^{th}$ TGP output.

For all q, the portion of the $(q-1)^{th}$ TGP output having length $R_{tag}$ which forms all or part of the $q^{th}$ tag portion may be the first $R_{tag}$ bits of the $(q-1)^{th}$ TGP output. Other selections of $R_{tag}$ bits of the $(q-1)^{th}$ TGP output may also be used, though.

The value of Q is based on the length of the output of each of the TGP functions and the desired length of the authentication tag. Preferably, the desired length of the authentication tag is an integer multiple of the length of the output of each of the TGP functions. The first to $Q^{th}$ TGP functions may be identical, i.e. the same TGP function may be applied to each of the TGP function inputs at successive stages of the TGP of the cryptographic function. The TGP functions may be TGP permutation functions, such as fixed length permutation functions. The permutation function may be a Keccak-f or Keccak-p permutation function. Alternatively AES or SHA-2 may be used as pseudo-random permutation functions. Furthermore, the first to $Q^{th}$ TGP functions may be the same as the first to $N^{th}$ MPP functions, and the first to $M^{th}$ CKPP functions i.e. the same function may be applied to each of the CKPP function inputs at successive stages of the CKPP of the cryptographic function, to each of the MPP inputs at successive stages of the MPP of the cryptographic function, and then to each of the TGP inputs at successful stages of the TGP of the cryptographic function.

After the application of the Q stages of the TGP of the cryptographic function, the computer-implemented method may further comprise combining the first to $(q-1)^{th}$ tag portions to generate the authentication tag. Combining the first to $(q-1)^{th}$ tag portions may comprise concatenating the first to $(q-1)^{th}$ tag portions to generate the authentication tag. When the computer-implemented method is used to decrypt an encrypted message, the computer-implemented method may further comprise comparing the generated authentication tag with a reference authentication tag in order to authenticate the decrypted message. If the authentication tag matches the reference authentication tag, then the decrypted message is authenticated. Herein, a reference authentication tag is an expected authentication tag which would be generated in the event that the data has not been tampered with.

The first to $N^{th}$ TGP functions may take an input having a predetermined length $B''$, and may generate an output having the same length $B''$. Therefore, the first to $N^{th}$ TGP function inputs may have length $B''$. $B''$ may be the same as $B$, to enable the same functions to be used as the TGP functions as the functions used as the MPP functions. By implication, $B''$ may also be the same as B' so that the same functions can be used as the TGP functions as the functions used as the MPP functions and the CKPP functions.

In addition to a cryptographic key processing phase of the cryptographic function being performed before the message processing phase of the function, the cryptographic function may further comprise an associated data processing phase (ADPP). During the ADPP, data which is associated with the message, but not part of the message may be processed. The ADPP is distinguished from the CKPP because the associated data is not a cryptographic key. The associated data may comprise: the time of the request, the identity of the requester (e.g. an identifier of a client device or a user of a client device), access rights of the requester, and context of use. The associated data may be comprised in the input data which also comprises the message.

In such cases, the computer-implemented method may further comprise receiving associated data, the associated data comprising $P$ associated data portions, where $P$ is greater than or equal to 1. The cryptographic key may be an encryption key or a decryption key. In those implementations in which the cryptographic function comprises a CKPP, an ADPP, and an MPP, the computer-implemented method may comprise applying the CKPP before applying the ADPP, and applying the ADPP before the MPP. Accordingly, the MPP input data referred to previously may comprise or be an output of the ADPP.

Accordingly, the computer-implemented method of the first aspect of the invention may comprise applying a first stage of the ADPP of the cryptographic function, wherein applying the first stage of the ADPP of the cryptographic function comprises: applying a first ADPP obfuscation function to a first associated data portion to generate a first obfuscated ADPP input; and applying a first ADPP function to a first ADPP function input derived from the first obfuscated ADPP input and the initial state data, to generate a first ADPP output.

In some cases, the associated data may comprise a plurality of $P$ associated data portions, i.e. the value of $P$ may be greater than one. In such cases, the computer-implemented method may further comprise, after applying the first stage of the ADPP of the cryptographic function, applying a further $(P\text{-}1)$ stages of the ADPP of the cryptographic function. Each of the further $(M\text{-}1)$ stages of the ADPP of the cryptographic function may be applied to a respective associated data portion of the remaining $(P\text{-}1)$ associated data portions. In this way, it is possible to ensure that the whole of the cryptographic key is processed. For $1 < p \le P$, applying a $p^{th}$ stage of the ADPP of the cryptographic function comprises: applying a $p^{th}$ ADPP obfuscation function to a $p^{th}$ associated data portion to generate a $p^{th}$ obfuscated ADPP input; and applying a $p^{th}$ ADPP function to a $p^{th}$ ADPP function input derived from the $p^{th}$ obfuscated ADPP input and a $(p\text{-}1)^{th}$ ADPP output, to generate a $p^{th}$ ADPP output.

As discussed previously, the MPP input data may be an output of the ADPP of the cryptographic function, or may comprise an output of the ADPP of the cryptographic function. More specifically, the MPP input data may be the $P^{th}$ ADPP output, or the MPP input data may comprise the $P^{th}$ ADPP output. It has been stated elsewhere that the first MPP function input is "derived" from the first MPP obfuscated input and the initial state data. In this context, the term "derived" is used broadly, to refer to the fact that the $P^{th}$ ADPP output is ultimately derived from the initial state data, via the ADPP of the cryptographic function, and in some implementations via the CKPP and the ADPP of the cryptographic function.

The first to $P^{th}$ ADPP functions may take an input having a predetermined length $B'''$, and may generate an output having the same length $B'''$. Therefore, the first to $P^{th}$ ADPP function inputs may have length $B'''$. The initial state data may have length $B'''$.

In order to provide an increased degree of security against certain attacks, the first ADPP function input may comprise a first portion having a length $R'''$ (where $R'''$ may be referred to as the rate or bitrate of the ADPP of the cryptographic function) which is derived from the first obfuscated ADPP input and the initial state data, and a second portion having a length $C'''$ (where $C'''$ may be referred to as the capacity of the ADPP of the cryptographic function) which is not derived from the first obfuscated ADPP input. For completeness:

$$B''' = R''' + C'''$$

By virtue of the fact that only part of the input to the ADPP function is derived from an associated data portion (i.e. from the first obfuscated ADPP input), an additional level of security is applied.

We now discuss the structure of the first ADPP function input, and its derivation from the first ADP obfuscated input and the initial state data in more detail.

The ADPP of the cryptographic function may take, as an input, ADPP input data. The ADPP input data may be the initial state data, or may be the $M^{th}$ CKPP output, derived as explained previously in this application.

The ADPP input data may have length $B'''$, and may be divided into a first portion having length $R'''$ and a second portion having length $C'''$. The first obfuscated ADPP input may also have length $R'''$. As outlined earlier, this may be by virtue of a padding function being used to ensure that the message portions each have a predetermined bit length, or because the obfuscation functions are such that their outputs are always of length $R'''$.

Generating the first portion of the first ADPP function input, having length $R'''$, may comprise combining the first portion of the ADPP input data and the first obfuscated ADPP input. Combining the first portion of the ADPP input data and the first obfuscated ADPP input may comprise applying a logical combination function to the first portion of the ADPP input data and the first obfuscated ADPP input, the logical combination function optionally configured to receive two inputs having an identical length (in this case $R'''$), and to generate an output having the same length (again, in this case $R'''$). The logical combination function may be an XOR function.

Generating the first ADPP function input may then comprise combining the first portion of the first ADPP function input, derived as outlined above, with the second portion of the ADPP input data. Because the first portion of the first ADPP function input has length $R'''$, and the second portion of the ADPP input data has length $C'''$, a combination of the two has length $B'''$. Combining the first portion of the first ADPP function input with the second portion of the ADPP input data may comprise concatenating the first portion of the first ADPP function input and the second portion of the ADPP input data.

Similarly, in order to provide an increased degree of security against certain attacks, the each of the subsequent $(P-1)$ ADPP function inputs (i.e. the second to the $P^{th}$ ADPP function inputs) may also comprise a first portion having a length $R'''$ which is derived from the $p^{th}$ obfuscated ADPP input and the $(p-1)^{th}$ ADPP output, and a second portion having a length $C'''$ which is not derived from the $p^{th}$ obfuscated ADPP input. As before, by virtue of the fact that only part of the input to the ADPP function is derived from a message portion (i.e. from the $p^{th}$ obfuscated ADPP input), an additional level of security is applied.

We now discuss the structure of the subsequent $(P-1)$ ADPP function inputs, and their derivation.

A general $p^{th}$ stage of the ADPP of the cryptographic function may take as an input the data output from the previous stage of the ADPP of the cryptographic function. More specifically, a general $p^{th}$ stage of the ADPP of the cryptographic function may have an input comprising the $(p-1)^{th}$ ADPP output data. The $(p-1)^{th}$ ADPP output data may have length $B'''$, and may be divided into a first portion having length $R'''$ and a second portion having length $C'''$. Like the first obfuscated ADPP input, the general $p^{th}$ obfuscated ADPP input may also have length $R'''$.

Generating the first portion of the $p^{th}$ ADPP function input, having length $R'''$, may comprise combining the first portion of the $(p-1)^{th}$ ADPP output and the $p^{th}$ ADPP obfuscated input, which may comprise applying a logical combination function to the first portion of the $(p-1)^{th}$ ADPP output and the $p^{th}$ ADPP obfuscated input, the logical combination function optionally configured to receive two inputs having an identical length (in this case $R'''$), and to generate an output having the same length (again, in this case $R'''$). The logical combination function may be an XOR function.

Generating the $p^{th}$ ADPP function input may then comprise combining the first portion of the $p^{th}$ ADPP function input, derived as outlined above, with the second portion of the $(p-1)^{th}$ ADPP output. Because the first portion of the $p^{th}$ ADPP function input has length $R'''$, and the second portion of the $(p-1)^{th}$ ADPP output has length $C'''$, a combination of the two has length $B'''$. Combining the first portion of the $p^{th}$ ADPP function input with the second portion of the $(p-1)^{th}$ ADPP output may comprise concatenating the first portion of the $p^{th}$ ADPP function input and the second portion of the $(p-1)^{th}$ ADPP output.

$R'''$ may be the same as $R$. $C'''$ may be the same as $C$. $B'''$ may be the same as $B$. This enables the processing in the MPP of the cryptographic function and the ADPP of the cryptographic function effectively to be continuous, with the same obfuscation functions and ADPP/MPP functions to be used throughout. In those implementations in which the cryptographic function further comprises a CKPP, $R'''$ may also be the same as $R'$, $C'''$ may be the same as $C'$, and $B'''$ may be the same as $B'$, to enable the use of the same functions throughout all three phases.

The first to $P^{th}$ ADPP functions may be identical, i.e. the same ADPP function may be applied to each of the ADPP function inputs at successive stages of the ADPP of the cryptographic function. The ADPP functions may be ADPP permutation functions, such as fixed length permutation functions. The permutation function may be a Keccak-f or Keccak-p permutation function. Alternatively AES or SHA-2 may be used as pseudo-random permutation functions. Furthermore, the first to $P^{th}$ ADPP functions may be the same as the first to $N^{th}$ MPP functions, i.e. the same function may be applied to each of the ADPP function inputs at successive stages of the ADPP of the cryptographic function, and to each of the MPP inputs at successive stages of the MPP of the cryptographic function. Evidently, the first to $P^{th}$ ADPP functions may be the same as the first to $M^{th}$ CKPP functions, i.e. the same function may be applied to each of the ADPP function inputs at successive stages of the ADPP of the cryptographic function, and to each of the CKPP inputs at successive stages of the CKPP of the cryptographic function.

The first to $P^{th}$ ADPP obfuscation functions may be identical, i.e. the same ADPP obfuscation function may be applied to each of the associated data portions at successive stages of the ADPP of the cryptographic function. Furthermore, the first to $P^{th}$ ADPP obfuscation functions may be the same as the first to $N^{th}$ MPP obfuscation functions, i.e. the same obfuscation unction may be applied to each of the associated data portions at successive stages of the ADPP of the cryptographic function, and to each of the message portions at successive stages of the MPP of the cryptographic function. Evidently, the first to $P^{th}$ ADPP obfuscation functions may be the same as the first to $M^{th}$ CKPP obfuscation functions, i.e. the same obfuscation function may be applied to each of the associated data portions at successive stages of the ADPP of the cryptographic function, and to each of the cryptographic key portions at successive stages of the CKPP of the cryptographic function.

The first aspect of the invention is directed toward a computer-implemented method, which might be executed by providers of a secure storage service. A second aspect of the invention provides a computer program or computer program product (which includes, for example, a software application which may be offered for download by a provider) comprising instructions which, when executed by a computer, cause the computer to execute the computer-implemented method of the first aspect of the invention. A third aspect of the invention provides a system or device, such as a secure storage provision system or device, which is located or locatable in a secure environment, the system or device configured to execute the computer-implemented method of the first aspect of the invention. Naturally, the optional features set out above in respect of the first aspect of the invention apply equally well to the second and third aspects of the invention.

A fourth aspect of the invention provides a computer-implemented method which is similar to the first aspect of the invention, without the use of obfuscation functions, and in which the initial state data is selected, generated, or retrieved based on the contents of a user request. In more detail, the computer-implemented method of the fourth aspect of the invention may comprise: receiving a request comprising input data comprising a message, the message comprising $N$ message portions, where $N$ is greater than or equal to 1; initializing a cryptographic function by retrieving or generating initial state data, the cryptographic function comprising a message processing phase (MPP); applying a first stage of the MPP of the cryptographic function, wherein applying the first stage of the MPP of the cryptographic function comprises: applying a first MPP function to a first MPP function input derived from a received message portion and the initial state data of the encryption function to generate a first MPP output, wherein the initial state data is retrieved or generated based on data comprised in the request or data related to the request. The fourth aspect of the invention is directed toward a computer-implemented method, which might be executed by providers of a secure storage service. A fifth aspect of the invention provides a computer program or computer program product (which includes, for example, a software application which may be offered for download by a provider) comprising instructions which, when executed by a computer, cause the computer to execute the computer-implemented method of the first aspect of the invention. A sixth aspect of the invention provides a system or device, such as a secure storage provision system or device, which is located or locatable in a secure environment, the system configured to execute the computer-implemented method of the first aspect of the invention. Naturally, the optional features set out above in respect of the first aspect of the invention apply equally well to the fourth, fifth and sixth aspects of the invention.

The invention includes the combination of the aspects and preferred features described except where such a combination is clearly impermissible or expressly avoided.

BRIEF DESCRIPTION OF THE DRAWINGS

Embodiments of the present invention will now be described with reference to the accompanying drawings, in which:

- Fig. 1 depicts a system which is configured to implement computer-implemented methods according the present disclosure.

- Fig. 2A depicts an example of the encryption module shown in Fig. 1.

- Fig. 2B depicts an example of the decryption module shown in Fig. 1.

- Fig. 3 is a flowchart illustrating a high-level process via which an encryption request may be received and fulfilled.

- Fig. 4 is a flowchart illustrating the application of various phases of the cryptographic function.

- Fig. 5 is a flowchart illustrating a process by which the cryptographic function may be initialized.

- Fig. 6 schematically illustrates a cryptographic key processing phase of the cryptographic function.

- Fig. 7 schematically illustrates the structure of the initial state data.

- Fig. 8 schematically illustrates an associated data processing phase of the cryptographic function.

- Fig. 9 schematically illustrates a message processing phase of the cryptographic function, as used during an encryption operation.

- Fig. 10 schematically illustrates a tag generation phase of the cryptographic function.

- Fig. 11 is a flowchart illustrating a high-level process via which a decryption request may be received and fulfilled.

- Fig. 12 schematically illustrates a first example of a message processing phase of the cryptographic function, as used during a decryption operation.

- Fig. 13 schematically illustrates a second example of a message processing phase of the cryptographic function, as used during a decryption operation.

- Fig. 14 schematically illustrates a third example of a message processing phase of the cryptographic function, as used during a decryption operation.

DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

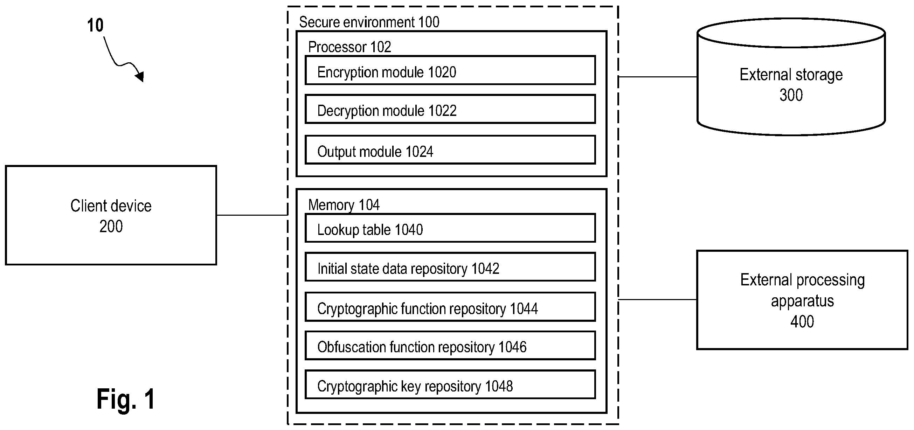

Fig. 1 depicts a system 10 which may be used to execute various computer-implemented methods of according to aspects of the present disclosure. The example system 10 shown in Fig. 1 is for illustrative purposes only, and it will be appreciated that other arrangements of hardware are possible within the scope of invention. The system 10 includes a secure environment 100, a client device 200, external storage 300, and external processing apparatus 400. At a high-level, implementations of the present invention relate to the enablement of secure storage of a received message, for example in the external storage 300. In some circumstances, it is unfeasible to store large volumes of data within the confines of the secure environment 100. With that in mind, the data may be received, securely, within the secure environment 100 from the client device 200, and then encrypted to generate an encrypted message, which may then be stored outside the secure environment 100, in a form which third parties are unable to determine the contents of the stored encrypted message. Implementations of the present invention are also directed towards retrieval and decryption of encrypted data which may be stored in the external storage 300. The various implementations of the present invention are discussed in detail below, with reference to Fig. 1 and the remaining drawings.

The secure environment 100, client device 200, external storage 300 and external processing apparatus 400 are depicted as separate entities in Fig. 1, but it will be appreciated that in various different implementations of this technology, one, two, three, or four of them may reside in the same hardware. When they do not reside on the same hardware, they may be connected via a network such as a wired network or a wireless network (e.g. a WiFi network, or a cellular network). The secure environment 100 includes a processor 102 and a memory 104. The processor 102 includes several modules and submodules. These are functional modules which are adapted to execute a particular function, and may be implemented in hardware (e.g. specific physical components which are configured to execute a particular function) or software (e.g. portions of code, which when executed by the processor 102, cause it to execute the particular function). Naturally, some of the modules may be implemented in software and other may be implemented in hardware.

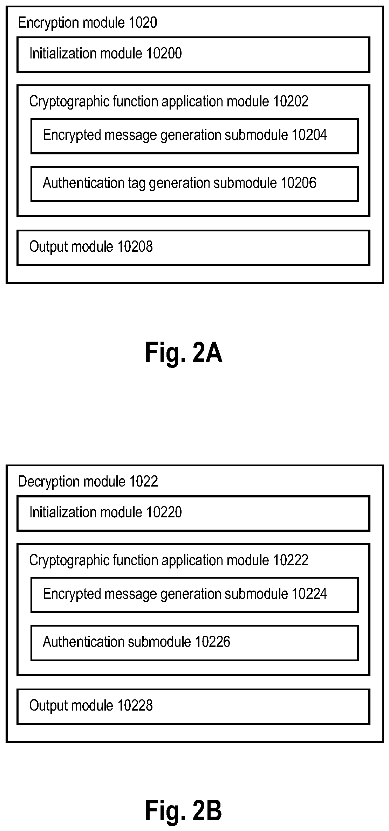

More specifically, processor 102 of the secure environment comprises an encryption module 1020, a decryption module 1022, and an output module 1024. The encryption module 1020 is shown in more detail in Fig. 2A, and comprises an initialization module 10200, a cryptographic function application module 10202, and an output module 10208. The cryptographic function application module 10204 of the encryption module 1020 comprises an encrypted message generation submodule 10204 and an authentication tag generation submodule 10206. The decryption module 1022 is shown in more detail in Fig. 2B, and comprises an initialization submodule 10220, a cryptographic function application module 10222, and an output module 10228. The cryptographic function application module 10222 of the decryption module 1022 comprises an encrypted message generation submodule 10224 and an authentication submodule 10226. The functions of each of these modules and submodules is explained later in this disclosure.

The memory 104 of the secure environment 100 stores a lookup table 1040, an initial state data repository 1042, a cryptographic function repository 1044, an obfuscation function repository 1046, and a cryptographic key repository 1048. Again, the nature of the data stored in each of these tables/repositories is explained later in this disclosure.

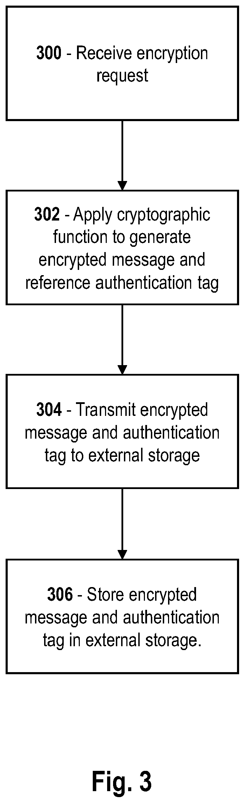

At their broadest, computer-implemented methods according to the present disclosure are generalizable to purposes other than encryption and decryption of messages. However, for illustrative purposes only, we describe encryption and decryption processes below with reference to the remaining drawings. Fig. 3 is a flowchart illustrating a high-level process which may take place when a client wishes to store their data securely.

A. Encryption operation

In a first step 300, an encryption request may be received at the secure environment 100. The encryption request may include various components, including a message to be encrypted and stored (which may take many forms, including a cryptographic key which it is very important to store securely) and associated data (as defined earlier in this disclosure). The associated data may include a user identifier and data indicative of a user's access rights. The associated data may also include data specifying that the client (i.e. the client device 200 or a user thereof) would like securely to store the data comprised in the message. In step 302, the cryptographic function is applied by the encryption module 1020 of the processor 102 in the secure environment, in order to generate an encrypted message and authentication tag.

We now discuss in detail the application of the cryptographic function in the context of encryption of a received message.

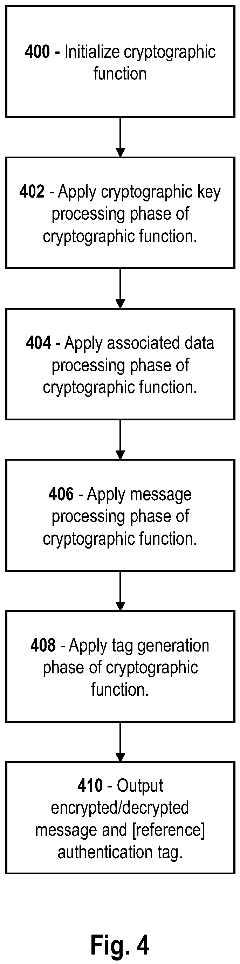

Fig. 4 is a flowchart illustrating the various phases of the application of the cryptographic function, as applied to an encryption function (though it will be appreciated that the same process is executed when the cryptographic function is used to execute a decryption operation, too).

i. Initialization phase

In a first step 400, the cryptographic function is initialized. In this case, the initialization module 10200 of the encryption module 1020 retrieves the cryptographic function from the cryptographic function repository 1046 of the memory 104 in the secure environment 100. As explained elsewhere in this disclosure, the cryptographic function is based on a combination of a sponge construction and a sponge duplex construction. Functions based on a sponge construction or a sponge duplex construction require initial state data. There are various ways in which the initial state data may be selected or generated. In some cases, default initial state data may be retrieved by the initialization module 10200 from the initial state data repository 1042. In other cases, the initial state data may be generated at random by an initial state data generator (not shown). In some cases, however, the initial state data may be selected or retrieved based on data such as the associated data received in the request, or other data such as the time and/or date at which the request is received.

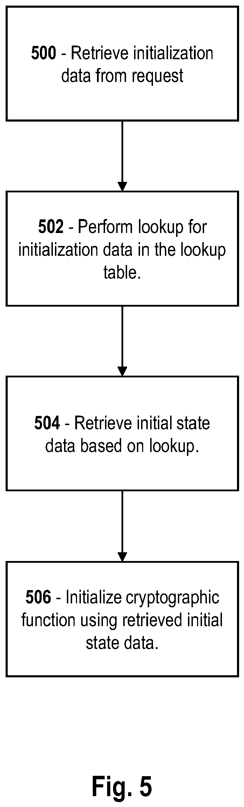

Fig. 5 is a flowchart illustrating a process by which initial state data may be selected or retrieved based on some initialization data. Herein, "initialization data" refers to any data which may be used to select the initial state data. The initialization data may comprise, be, or be comprised in the associated data which forms part of the request for encryption, received in step 300 of Fig. 3. In step 500 of Fig. 5, the initialization data is retrieved from the request, e.g. by initialization module 10200 of the encryption module 1020. In step 502, the initialization module 10200 may execute a lookup for the initialization data in lookup table 1040 stored in memory 104 in the secure environment 100. The lookup table 1040 may have stored therein a plurality of associations between various kinds of initialization data and corresponding initial state data to be used to initialize a cryptographic function based on the initialization data. Specifically, the lookup table may store associations between various kinds of initialization data and respective identifiers of initial state data, the identifiers labelling respective sets of initial state data which are stored in initial state data repository 1042 stored in the memory 104 in the secure environment 100. When initial state data is identified by virtue of the lookup in the lookup table 1040, it is retrieved in step 504 from the initial state data repository 1042. Then, in step 506, the cryptographic function is initialized using the retrieved initial state data.

Once the cryptographic function has been retrieved from the cryptographic function repository 1046 and the initial state data has been retrieved from the initial state data repository 1042, the cryptographic function may be considered initialized.

**ii. Cryptographic key processing phase**

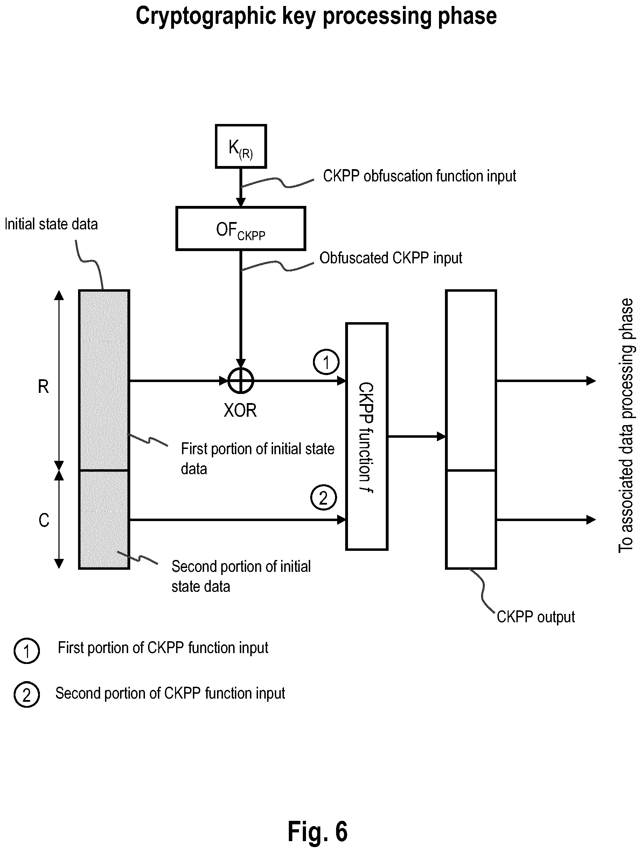

The process of Fig. 4 then continues to step 402, application of the cryptographic key processing phase of the cryptographic function. The cryptographic key process phase (or CKPP) is depicted schematically in Fig. 6, and explained in detail below.

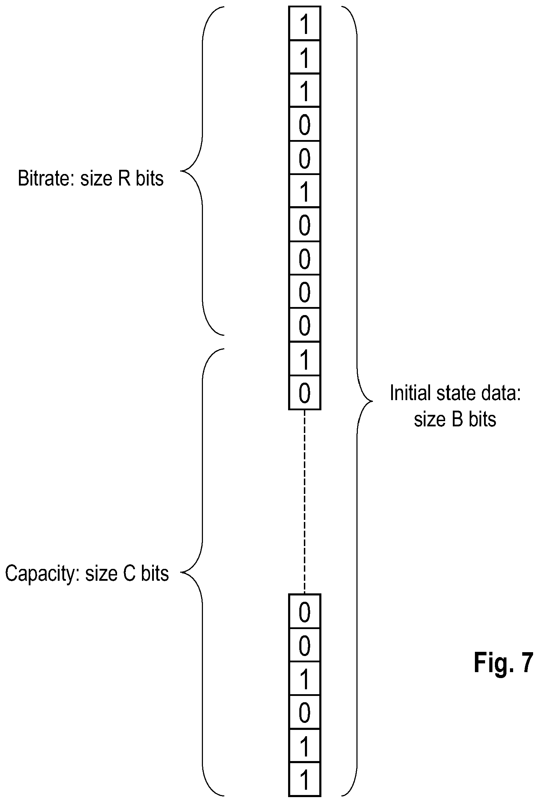

The initial state data, generated or retrieved as outlined above with reference to Figs. 4 and 5, is in the form of a block of data having a size B, and is shown shaded at the left-hand side of Fig. 6. Specifically, the initial state data may be in the form of a string of length, the string comprising a series of 0s and 1s in some order. The initial state data is divided into two sections, referred to herein as a first portion having size R (where R is referred to as the bitrate) and a second portion having size C (where C is referred to as the capacity). This is depicted schematically in Fig. 7.

During the cryptographic key processing a received cryptographic key $K_{(R)}$ is absorbed into the sponge constructions (here, by "absorbed", we mean that the cryptographic key is input into the function, but no specific output is generated based on it). The cryptographic key is denoted by $K_{(R)}$, where the subscript "(R)" denotes that the key has a size R, i.e. the same as the bitrate of the initial state data. The CKPP includes a CKPP permutation function denoted f, which may be a Keccak-f or Keccak-p permutation function. Alternatively AES or SHA-2 may be used as pseudo-random permutation functions. The CKPP also includes an CKPP obfuscation function $OF_{CKPP}$, and an XOR function.

We now describe the operation of the CKPP of the cryptographic function:

- The cryptographic key $K_{(R)}$ forms the first CKPP obfuscation function input, i.e. the CKPP obfuscation function is applied to the cryptographic key $K_{(R)}$, to generate CKPP obfuscated input. The obfuscated CKPP input has size R.

- The obfuscated CKPP input having size R is then combined with the first portion of the initial state data, also having size R, using the XOR function. The output of the XOR function, having size R, is then concatenated with the second portion of the initial state data, having size C, to generate the CKPP function input, having size B = R + C. The concatenation is not shown in Fig. 6, but the first portion and the second portion of the CKPP input are shown "arriving" at the CKPP function f, to illustrate that they both form inputs thereto.

- The CKPP function $f$ is then applied to the CKPP function input, to generate a CKPP output, also having size B = R + C. The CKPP output may have a first portion having size R and a second portion having size C.

In this manner, the cryptographic key $K_{(R)}$ has been absorbed into the sponge construction of the cryptographic function. In some implementations, the cryptographic key may have a size which is not identical to the bitrate R. The process which takes place then is explained elsewhere in this disclosure. In particular the CKPP may comprise more than a single stage, as also explained elsewhere in this disclosure.
5 The CKPP of the described implementation has a regular sponge construction, rather than a sponge duplex construction.

**iii. Associated data processing phase**

The process of Fig. 4 then moves onto step 404, the associated data processing phase or ADPP, in which associated data, denoted $A_{i(R)}$ $(1 < i < P)$, is absorbed into the sponge constructions in the same way as the cryptographic key was absorbed into the sponge construction in the cryptographic key processing phase of the cryptographic function, shown in Fig. 6.

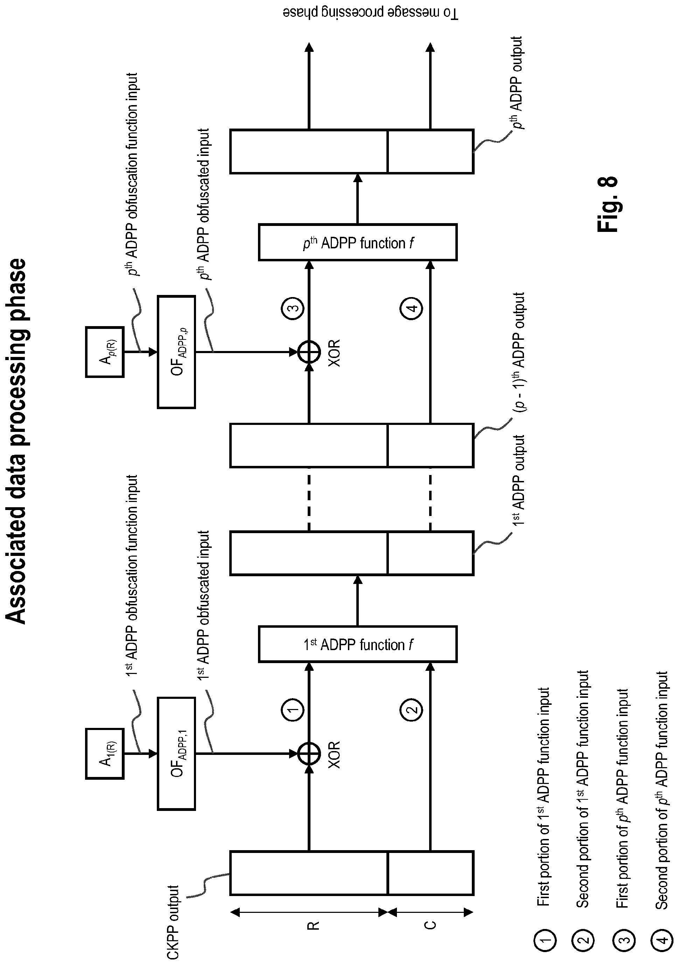

The associated data processing phase (ADPP) is depicted schematically in Fig. 8.

There are three main differences between the ADPP and the CKPP:

i. Firstly, the nature of the data being absorbed is different. "Associated data" as used herein refers to data which is not part of the message to be encrypted, but which is associated with it. For example, the associated data may comprise an identity or identifier of the client (either the user or user device) which submitted the initial request for secure storage. the associated data may also comprise a time at which the request was submitted, access rights of the client (i.e. the user or user device) and a context of use. The associated data is generally not data which needs to be encrypted before it is stored, in contrast to the message, which generally contains data which it is critical to encrypt, such as a cryptographic key (not to be confused with the cryptographic key which is used to encrypt the message, though).

ii. Secondly, the associated data in the example shown does not have size R, and there are therefore a plurality $P$ stages of the associated data processing phase. Specifically, each stage takes an input $A_{i(R)}$, where $0 < i < P$, and wherein the input at each stage has a size R, equal to the bitrate. If the size of the overall associated data A is not an integer multiple of the bitrate R, a padding function may be used in order to ensure that this is the case. This is explained elsewhere in this disclosure.

iii. Thirdly, the inputs to the various stages of the ADPP of the cryptographic function are based on previous stages of the cryptographic function, rather than being based on the initial state data, as is clear from Fig. 8, where the input to the ADPP, shown at the left-hand side of the drawing is the CKPP output.

Each stage of the ADPP includes a $p^{th}$ permutation function denoted $f$, which may be a Keccak-f or Keccak-p permutation function. Alternatively AES or SHA-2 may be used as pseudo-random

[6] The ADPP of the described implementation has a regular sponge construction, rather than a sponge duplex construction. permutation functions. Each $p^{th}$ stage of the ADPP also includes an ADPP obfuscation function $OF_{ADPP,p}$, and an XOR function.

We now describe the operation of a first stage of the ADPP of the cryptographic function.

- The first ADPP input $A_{1(R)}$ forms the first ADPP obfuscation function input, i.e. the first ADPP obfuscation function $OF_{ADPP,1}$ is applied to the first ADPP input $A_{0(R)}$, to generate first ADPP obfuscated input. The first ADPP obfuscated input has size R.

- The first ADPP obfuscated input having size R is then combined with a first portion of the CKPP output also having size R, using the XOR function. The output of the XOR function, having size R, is then concatenated with the second portion of the CKPP output, having size C, to generate the first ADPP function input, having size B = R + C. The concatenation is not shown in Fig. 8, but the first portion and the second portion of the 1st ADPP input are shown "arriving" at the ADPP function $f$, to illustrate that they both form inputs thereto.

- The first ADPP function $f$ is then applied to the first ADPP function input to generate a first ADPP output, also having size B = R + C. The first ADPP output may have a first portion having size R and a second portion having size C.

As discussed, the ADPP of the cryptographic function has $P$ stages, each having the same general structure. We now describe the operation of a general $p^{th}$ stage of the ADPP of the cryptographic function.

- The $p^{th}$ ADPP input $A_{p(R)}$ forms the $p^{th}$ ADPP obfuscation function input, i.e. the $p^{th}$ ADPP obfuscation function $OF_{ADPP,p}$ is applied to the $p^{th}$ ADPP input $A_{p(R)}$, to generate a $p^{th}$ ADPP obfuscated input. The $p^{th}$ ADPP obfuscated input has size R.

- The $p^{th}$ ADPP obfuscated input having size R is then combined with a first portion of the $(p-1)^{th}$ ADPP output also having size R, using the XOR function. The output of the XOR function, having size R, is then concatenated with the second portion of the $(p-1)^{th}$ ADPP output, having size C, to generate the $p^{th}$ ADPP function input, having size B = R + C. The concatenation is not shown in Fig. 8, but the first portion and the second portion of the $p^{th}$ ADPP input are shown "arriving" at the ADPP function $f$, to illustrate that they both form inputs thereto.

- The ADPP function $f$ is then applied to the $p^{th}$ ADPP function input to generate a $p^{th}$ ADPP output, also having size B = R + C. The $p^{th}$ ADPP output may have a first portion having size R and a second portion having size C.

In this manner, the associated data has been absorbed into the sponge construction.

**iv. Message processing phase**

The process of Fig. 4 then moves onto step 406, the message processing phase or MPP, in which the message, or strictly speaking a series of message portions derived from the received message, each denoted $M_{i(R)}$ ($1 < i < N$), is absorbed into the sponge duplex construction in a similar way to how the cryptographic key was absorbed into the sponge construction in the cryptographic key processing phase of the cryptographic function, and the associated data was absorbed into the sponge construction in the associated data processing phase shown in Figs. 6 and 8, respectively.

However, in addition to the message being absorbed into the sponge duplex construction, a series of processed data outputs are also generated, in the form of encrypted message portions $[Mi_{(R)}]$ ($1 < i < N$), where the square brackets denote that the message portion $M_{i(R)}$ has been encrypted.

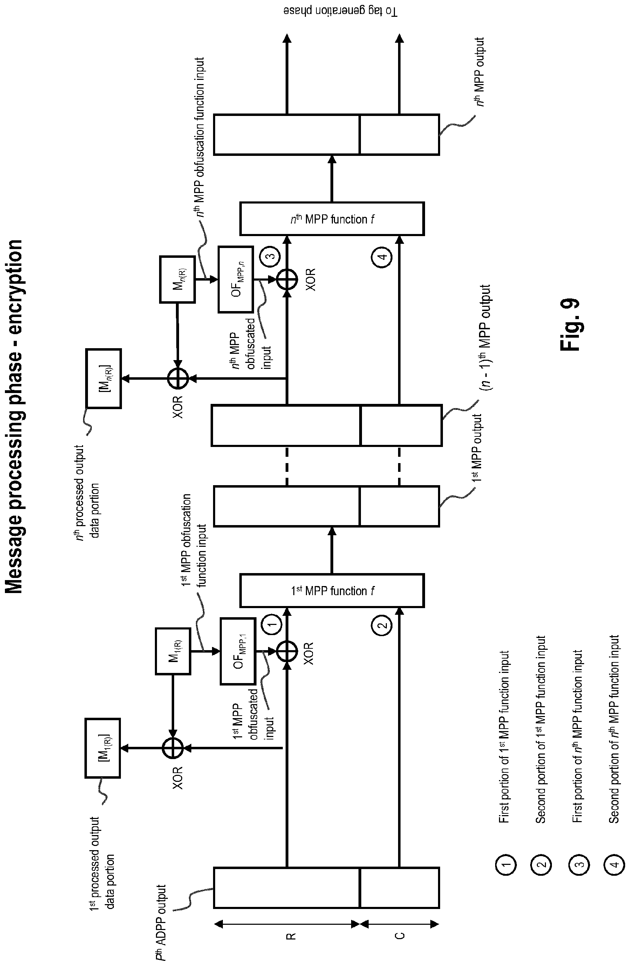

The message processing phase (MPP) is depicted schematically in Fig. 9. Each stage of the MPP includes a permutation function denoted f, which may be a Keccak-f or Keccak-p permutation function. Alternatively AES or SHA-2 may be used as pseudo-random permutation functions. Each $n^{th}$ stage of the MPP also includes an MPP obfuscation function $OF_{MPP,n}$, and an XOR function.

We now describe the operation of a first stage of the MPP of the cryptographic function.

- The first message portion $M_{1(R)}$, having size R, is combined with the $P^{th}$ ADPP output (i.e. the final output of the ADPP of the cryptographic function), also having size R, using the XOR function. The result of this XOR combination is a first processed output data portion also having size R, which is a first encrypted message portion denoted $[M_{1(R)}]$.

- The first message portion $M_{1(R)}$ also forms the first MPP obfuscation function input, i.e. the first MPP obfuscation function $OF_{MPP,1}$ is applied to the first message portion $M_{1(R)}$, to generate a first MPP obfuscated input. The first MPP obfuscated input has size R.

- The first MPP obfuscated input having size R is then combined with a first portion of the $P^{th}$ (i.e. final) ADPP output also having size R, using the XOR function. The output of the XOR function, having size R, is then concatenated with the second portion of the $P^{th}$ ADPP output, having size C, to generate the first MPP function input, having size B = R + C. The concatenation is not shown in Fig. 9, but the first portion and the second portion of the $1^{st}$ MPP input are shown "arriving" at the MPP function f, to illustrate that they both form inputs thereto.

- The first MPP function f is then applied to the first MPP function input to generate a first MPP output, also having size B = R + C. The first MPP output may have a first portion having size R and a second portion having size C.

As discussed, the MPP of the cryptographic function has N stages, each having the same general structure. We now describe the operation of a general $n^{th}$ stage of the MPP of the cryptographic function.

- The $n^{th}$ message portion $M_{n(R)}$, having size R, is combined with the $(n-1)^{th}$ MPP output, also having size R, using the XOR function. The result of this XOR combination is an $n^{th}$ processed output data portion also having size R. In the example of Fig. 9, the $n^{th}$ processed output data portion is an $n^{th}$ encrypted message portion denoted $[M_{n(R)}]$.

- The $n^{th}$ MPP input $M_{n(R)}$ forms the $n^{th}$ MPP obfuscation function input, i.e. the $n^{th}$ MPP obfuscation function $OF_{MPP,n}$ is applied to the $n^{th}$ MPP input $M_{n(R)}$, to generate a $n^{th}$ MPP obfuscated input. The $n^{th}$ MPP obfuscated input has size R.

- The $n^{th}$ MPP obfuscated input having size R is then combined with a first portion of the $(n-1)^{th}$ MPP output also having size R, using the XOR function. The output of the XOR function, having size R, is then concatenated with the second portion of the $(n-1)^{th}$ MPP output, having size C, to generate the $n^{th}$ MPP function input, having size B = R + C. The concatenation is not shown in Fig. 9, but the first portion and the second portion of the $n^{th}$ MPP input are shown "arriving" at the MPP function f, to illustrate that they both form inputs thereto.

- The $n^{th}$ MPP function f is then applied to the $n^{th}$ MPP function input to generate a $n^{th}$ MPP output, also having size B = R + C. The $n^{th}$ MPP output may have a first portion having size R and a second portion having size C.

**v. Tag generation phase**

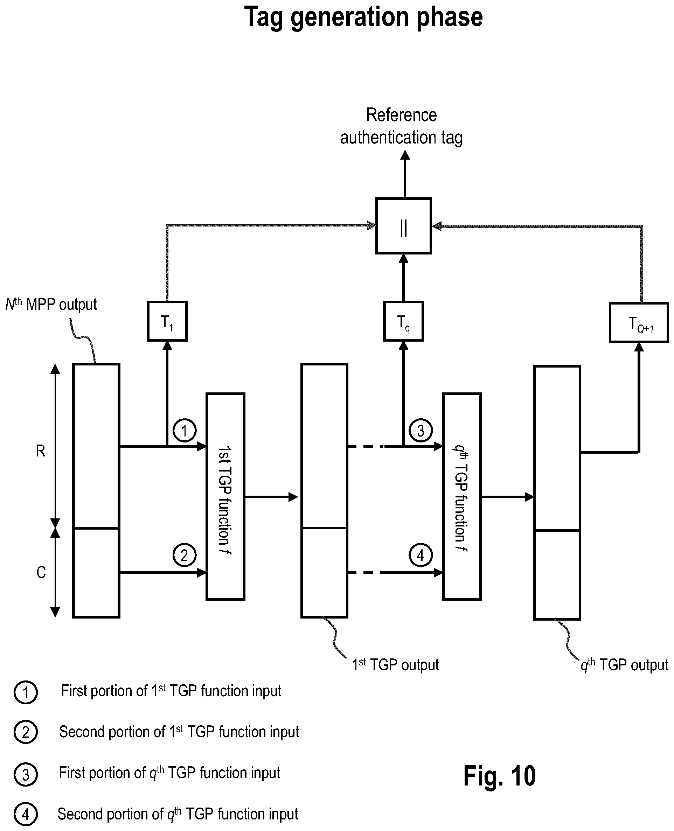

At this point in the method, the message has been encrypted and could be transmitted to e.g. the external storage 400 for secure storage. However, in order to improve security, and specifically to enable authentication of the encrypted data, the process of Fig. 4 further includes a tag generation phase TGP which is applied in step 408. During the tag generation phase, a reference authentication tag is generated. The tag generation phase is illustrated schematically in Fig. 10.

Indeed, the purpose of the introduction of the cryptographic key $K_{(R)}$ at the outset of the cryptographic function, and to a lesser extent the associated data $A_{p(R)}$ in the ADPP, is to introduce additional processing which enables the processed output data to be authenticated using the cryptographic key $K_{(R)}$.

No further external data is input into the cryptographic function during the TGP. Depending on the desired length of the authentication tag, the TGP includes a plurality of Q stages, the output of each stage having a size R. The respective outputs of each of each stage of the TGP may then be concatenated to provide the authentication tag having length $(Q+1).R$. The reason for the $Q+1$ is that a tag portion $T_q$ arises from each stage of the TGP, and there is an additional tag portion (the first tag portion $T_1$) which is the $N$th MPP output.

Each stage of the TGP includes a permutation function denoted f, which may be a Keccak-f or Keccak-p permutation function. Alternatively AES or SHA-2 may be used as pseudo-random permutation functions. Each stage of the TGP also includes an XOR function. There are no obfuscation functions in the TGP because no external data is received.

The first tag portion $T_1$ is the $N$th (i.e. final) MPP output.

In a first stage of the TGP, a first tag portion is output, which is the $N$th (i.e. final) MPP output. Then, the first TGP function f is applied to the $N$th MPP output to generate a first TGP output.

In a general $q$th stage of the TGP, where $1 < q \leq Q$, the $(q-1)$th TGP is output as the $q$th tag portion $T_q$. Then, the $q$th TGP function is applied to the $(q-1)$th TGP. The $Q$th TGP output may also output as a tag portion $T_{Q+1}$.

After the stages of the TGP have been applied, the generated tag portions are then concatenated (denoted "||" in Fig. 10) to generate the reference authentication tag.

### vi. Output of the cryptographic function

The process then proceeds to step 410 of Fig. 4, which may be referred to as an output phase. In this step, the $N$ encrypted message portions $[M_{n(R)}]$ generated in step 406 and the reference authentication tag generated in step 408 are concatenated, and output by the output module 10208 of the encryption module 1020 of the processor 102 in the secure environment.

This completes step 302 of Fig. 3, which then proceeds to step 304, in which the output module 1024 of the processor 102 transmits the concatenated encrypted message and reference authentication tag out of the secure environment 100, e.g. to the external storage 300, where it is stored in step 306.

The encryption and storage operation is thus completed, and the message which the user of client device 200 requested to encrypt and store securely has been stored, in encrypted form, in the external storage 300, along with a reference authentication tag that enables either the client device 200, or other external processing apparatus 400 to verify that the encrypted message has not been tampered with during a decryption operation, discussed next.

### B. Decryption operation

Implementations of computer-implementations according to the present disclosure may also be used to decrypt encrypted messages, specifically messages which have been encrypted using the same cryptographic function, cryptographic key, and associated data. A user of client device 200 may wish simply to decrypt and retrieve their encrypted data. Alternatively, though, for example when the encrypted message is an encrypted cryptographic key, the user of client device 200 may wish to transmit the cryptographic key to e.g. external processing apparatus 400 for use in a subsequent operation. For example the cryptographic key may be used in an AES encryption scheme. In those cases, it is desirable that the decrypted message is never transmitted "in the clear", i.e. never transmitted in its decrypted state. We discuss various decryption schemes, some of which ensure that the key is never transmitted in the clear.

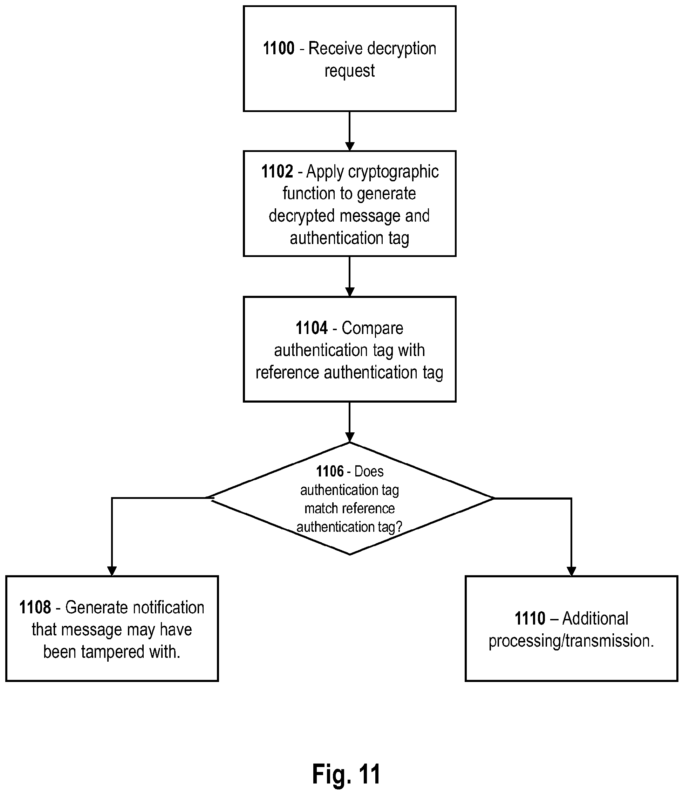

Fig. 11 is a flowchart illustrating a high-level process which may take place when a client wishes to decrypt encrypted data stored e.g. in the external storage 300.

In a first step 1100, a decryption request may be received at the secure environment. The decryption request may include various components, including an encrypted message to be decrypted, or an identifier indicating the location of the encrypted message on external storage 300, and associated data (as defined earlier in this disclosure). The associated data may include a user identifier and data indicative of a user's access rights. The associated data may also include data specifying an operation that the client (i.e. the client device 200 or a user thereof) would like to execute (or have executed) on the decrypted data, such as storage or transmission to e.g. external processing apparatus 400 for subsequent operations. The decryption request may further comprise a reference authentication tag, generated as explained in section A(v) above.

In step 1102, the cryptographic function is applied by the decryption module 1022 of the processor 102 in the secure environment, in order to decrypt and authenticate the encrypted message.

We now discuss in detail the application of the cryptographic function in the context of decryption of an encrypted message.

As before, Fig. 4 is a flowchart illustrating the various phases of the application of the cryptographic function, which may equivalently be applied to an encryption or decryption function.

### i. Initialization phase

In a first step 400, the cryptographic function is initialized. In this case, the initialization module 10220 of the decryption module 1022 retrieves the cryptographic function from the cryptographic function repository 1046 of the memory 104 in the secure environment 100. As explained elsewhere in this disclosure, the cryptographic function is based on a combination of a sponge construction and a sponge duplex construction. Functions based on a sponge construction or a sponge duplex construction require initial state data. There are various ways in which the initial state data may be selected or generated. In some cases, default initial state data may be retrieved by the initialization module 10220 from the initial state data repository 1042. In other cases, the initial state data may be generated at random by an initial state data generator (not shown). In some cases, however, the initial state data may be selected or retrieved based on data such as the associated data received in the request, or other data such as the time and/or date at which the request is received.

Fig. 5 is a flowchart illustrating a process by which initial state data may be selected or retrieved based on some initialization data. Herein, "initialization data" refers to any data which may be used to select the initial state data. The initialization data may comprise, be, or be comprised in the associated data which forms part of the request for encryption, received in step 300 of Fig. 3. The initialization data may comprise the initial state data which was used during the cryptographic key processing phase of the cryptographic function that was used to generate the encrypted message, or an identifier indicating e.g. the location of that initial state data in the initial state data repository 1042 in the memory 104 in the secure environment 100.

In step 500 of Fig. 5, the initialization data is retrieved from the request, e.g. by initialization module 10220 of the encryption module 1022. In step 502, the initialization module 10200 may execute a lookup for the initialization data in lookup table 1040 stored in memory 104 in the secure environment 100. The lookup table 1040 may have stored therein a plurality of associations between various kinds of initialization data and corresponding initial state data to be used to initialize a cryptographic function based on the initialization data. Specifically, the lookup table may store associations between various kinds of initialization data and respective identifiers of initial state data, the identifiers labelling respective sets of initial state data which are stored in initial state data repository 1042 stored in the memory 104 in the secure environment 100. When initial state data is identified by virtue of the lookup in the lookup table 1040, it is retrieved in step 504 from the initial state data repository 1042. Then, in step 506, the cryptographic function is initialized using the retrieved initial state data.

Once the cryptographic function has been retrieved from the cryptographic function repository 1046 and the initial state data has been retrieved from the initial state data repository 1042, the cryptographic function may be considered initialized.

## ii. Cryptographic key processing phase

The process of Fig. 4 then moves on to step 402, the cryptographic key processing phase.

The cryptographic key processing phase for a decryption operation is identical to the cryptographic key processing phase for the encryption operation, so we refer to section A(ii) above for details of that process, to avoid unnecessary repetition.

## iii. Associated data processing phase

The process of Fig. 4 then moves on to step 404, the associated data processing phase.

The associated data processing phase for a decryption operation is identical to the associated data processing phase for the encryption operation, so we refer to section A(iii) above for details of that process, to avoid unnecessary repetition.

## iv. Message processing phase

The process of Fig. 4 then moves onto step 406, the message processing phase or MPP, in which the encrypted message message, or strictly speaking a series of encrypted message portions derived from the received encrypted message, each denoted $[M_{i(R)}]$ ($1 < i < N$), is absorbed into the sponge duplex construction in the same way as the cryptographic key was absorbed into the sponge construction in the cryptographic key processing phase of the cryptographic function, and the associated data was absorbed into the sponge construction in the associated data processing phase shown in Figs. 6 and 8, respectively.

However, in addition to the encrypted message being absorbed into the sponge duplex construction, a series of processed data outputs are also generated, in the form of decrypted message portions $M_{i(R)}$ ($1 < i < N$), where the removal of the square brackets denote that the encrypted message portion $[M_{i(R)}]$ has been decrypted.

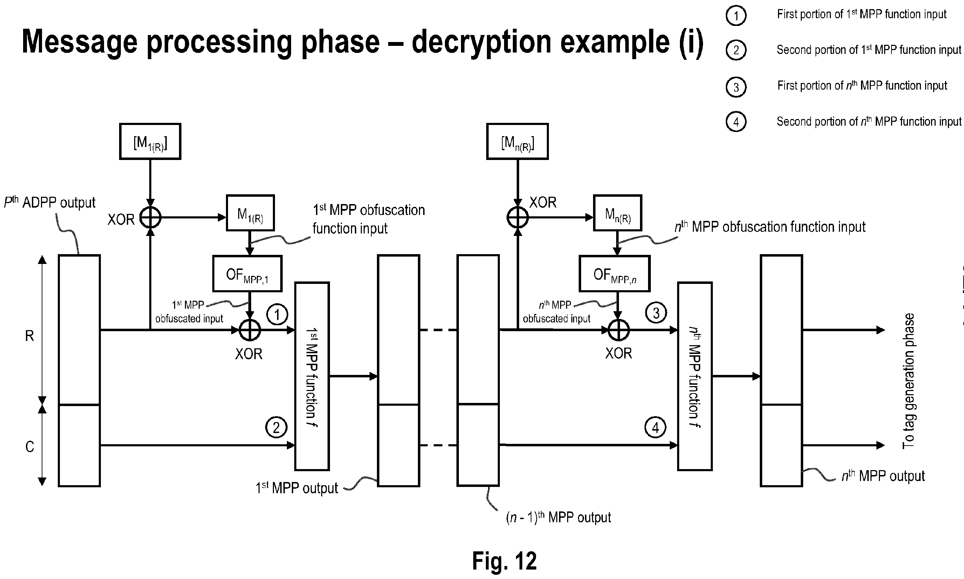

The MPP of the cryptographic function when applied to a decryption operation may take various forms, depending on e.g. whether there is a need to prevention transmission of the decrypted message in the clear. Figs. 12 to 14 depict various (non-exhaustive) examples of message processing phases which may be used to decrypt an encrypted message, and are explained in turn.

*Example (i)*

A first example is shown in Fig. 12. A cryptographic function employing the MPP shown in Fig. 12 may be suitable for applications in which it is not critical that the decrypted message is transmitted in an encrypted or masked state, i.e. there is limited risk associated with the transmission of the decrypted message in the clear.

Each stage of the MPP shown in Fig. 12 includes an $n^{th}$ permutation function denoted f, which may be a Keccak-f or Keccak-p permutation function. Alternatively AES or SHA-2 may be used as pseudo-random permutation functions. Each $n$th stage of the MPP also includes an MPP obfuscation function $OF_{MPP,n}$, and an XOR function.

We now describe the operation of a first stage of the MPP of the cryptographic function.

- The first encrypted message portion $[M_{1(R)}]$, having size R, is combined with the $P$th ADPP output, also having size R, using the XOR function. The result of this XOR combination is a first processed output data portion also having size R. Due to the properties of the XOR function, in the example of Fig. 12, the first processed output data portion is a first decrypted message portion denoted $M_{1(R)}$. In other words, by combining the first encrypted message portion $[M_{1(R)}]$ with the $P$th ADPP output using an XOR function, it is possible to retrieve the original message portion $M_{1(R)}$ from which the first encrypted message portion $[M_{1(R)}]$ was generated.

- The first decrypted message portion $M_{1(R)}$ then forms the first MPP obfuscation function input, i.e. the first MPP obfuscation function $OF_{MPP,1}$ is applied to the first decrypted message portion $M_{1(R)}$, to generate a first MPP obfuscated input. The first MPP obfuscated input has size R.

- The first MPP obfuscated input having size R is then combined with a first portion of the $P$th (i.e. final) ADPP output also having size R, using the XOR function. The output of the XOR function, having size R, is then concatenated with the second portion of the $P$th ADPP output, having size C, to generate the first MPP function input, having size B = R + C. The concatenation is not shown in Fig. 12, but the first portion and the second portion of the 1st MPP input are shown "arriving" at the MPP function $f$, to illustrate that they both form inputs thereto.

- The first MPP function $f$ is then applied to the first MPP function input to generate a first MPP output, also having size B = R + C. The first MPP output may have a first portion having size R and a second portion having size C.

As discussed, the MPP of the cryptographic function has $N$ stages, each having the same general structure. We now describe the operation of a general $n$th stage of the MPP of the cryptographic function.

- The $n$th encrypted message portion $[M_{n(R)}]$, having size R, is combined with the $(n$-1$)$th MPP output, also having size R, using the XOR function. The result of this XOR combination is an $n$th processed output data portion also having size R. Due to the properties of the XOR function, in the example of Fig. 12, the $n$th processed output data portion is a $n$th decrypted message portion denoted $M_{n(R)}$. In other words, by combining the $n$th encrypted message portion $[M_{n(R)}]$ with the $(n$-1$)$th MPP output using an XOR function, it is possible to retrieve the original message portion $M_{n(r)}$ from which the $n$th encrypted message portion $[M_{n(R)}]$ was generated.

- The $n$th MPP input $M_{n(R)}$ forms the $n$th MPP obfuscation function input, i.e. the $n$th MPP obfuscation function $OF_{MPP,n}$ is applied to the $n$th MPP input $M_{n(R)}$, to generate a $n$th MPP obfuscated input. The $n$th MPP obfuscated input has size R.

- The $n$th MPP obfuscated input having size R is then combined with a first portion of the $(n$-1$)$th MPP output also having size R, using the XOR function. The output of the XOR function, having size R, is then concatenated with the second portion of the $(n$-1$)$th MPP output, having size C, to generate the $n$th MPP function input, having size B = R + C. The concatenation is not shown in Fig. 12, but the first portion and the second portion of the $n$th MPP input are shown "arriving" at the MPP function $f$, to illustrate that they both form inputs thereto.

- The $n$th MPP function $f$ is then applied to the $n$th MPP function input to generate a $n$th MPP output, also having size B = R + C. The $n$th MPP output may have a first portion having size R and a second portion having size C.

According to the implementation of Fig. 12, the $N$ processed output data portions, i.e. the $N$ decrypted message portions $M_{n(R)}$ may then be concatenated to retrieve the original message, from which the encrypted message was generated. This decrypted message may then be transmitted elsewhere for subsequent processing.

*Example (ii)*

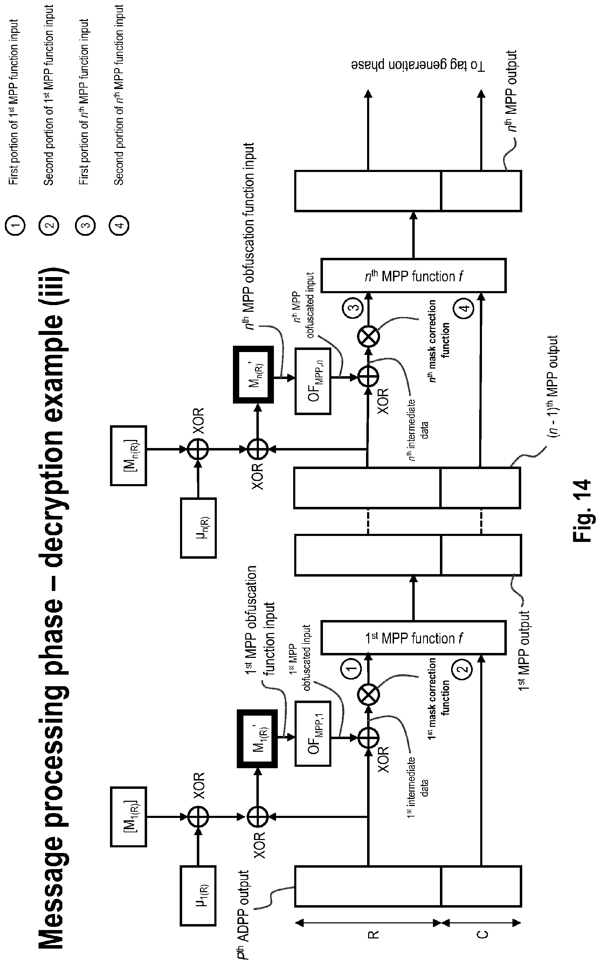

In example (ii), the processing outlined above in respect of example (i) is the same. But, in order to avoid transmitting the decrypted message in the clear, additional steps are executed on the decrypted message portions $M_{n(R)}$ before transmission. This is depicted in Fig. 14.

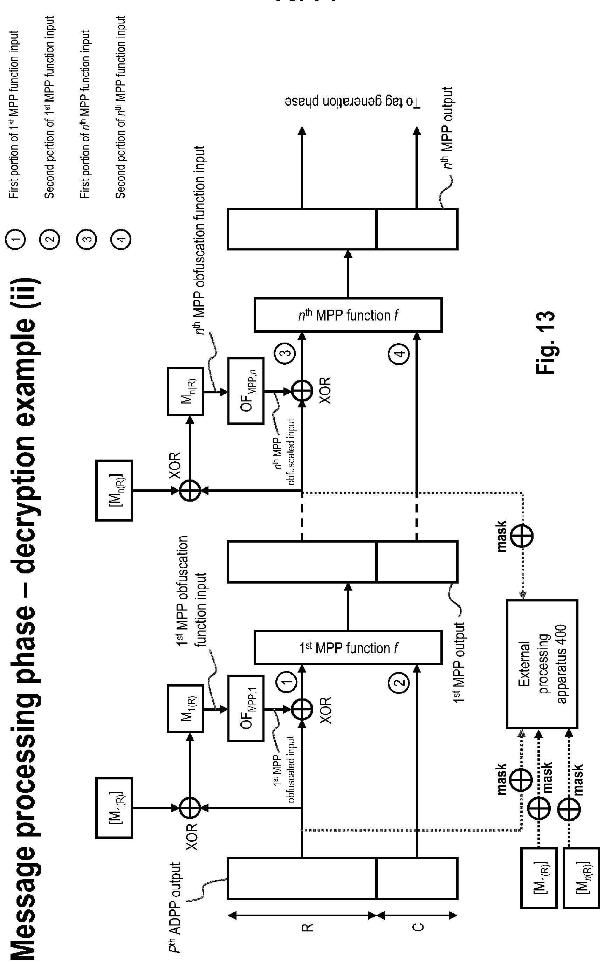

As shown in Fig. 13, rather than outputting and concatenating the decrypted message portions $M_{n(R)}$, a mask may be applied to each of the first to $N$th MPP outputs and these may be output, e.g. to external processing apparatus 400. A mask may be applied to each of the encrypted message portions $[M_{n(R)}]$, and these may also be output, e.g. to the external processing apparatus 400.

In this manner neither the MPP outputs nor the decrypted message portions are transmitted in the clear. The decrypted message portions $M_{i(R)}$ may then be retrieved at the destination, e.g. the external processing apparatus 400. In some embodiments, applying a mask may comprise combining the encrypted message portions $[M_{n(R)}]$ with a mask using an XOR function, or combining the first to $N$th MPP outputs with a mask using an XOR function. In this case, by combining the same mask with the masked encrypted message portions $[M_{n(R)}]$ or masked $N$th MPP outputs using an XOR function, the original encrypted message portions $[M_{n(R)}]$ or $N$th MPP outputs may be retrieved. This is a consequence of the properties of the XOR functions. The masks $\mu_n$ may be transmitted to the external processing apparatus 400 separately to reduce the chance that external attackers can retrieve them both.

*Example (iii)*

Example (iii) is another example in which measures are taken to ensure that the decrypted message is not transmitted in the clear, and is depicted schematically in Fig. 14.

We now describe the operation of a first stage of the MPP of the cryptographic function of Fig. 14 according to example (iii).

- Firstly, the first encrypted message portion $[M_{1(R)}]$, having size R, is combined with a first mask $\mu_{1(R)}$ using an XOR function, to generate a first masked encrypted message portion $[M_{1(R)}]'$, also having size R. This may alternatively be referred to as applying a first mask $\mu_0$ to the first encrypted message portion $[M_{1(R)}]$.

- The first masked encrypted message portion $[M_{1(R)}]'$ (thicker edges are used to indicate masked message portions), having size R, is then combined with the $P$th ADPP output, also having size R, using an XOR function. The result of this XOR combination is a first processed output data portion also having size R. The first processed output data portion is a first masked decrypted message portion denoted $M_{1(R)}'^7$, i.e. equivalent to what would be obtained by applying the first mask $\mu_0$ to the first decrypted message portion $M_{0(R)}$. In other words, by combining the first masked encrypted message portion $[M_{1(R)}]'$ with the $P$th ADPP output using an XOR function, it is possible to retrieve a masked version of the original first message portion $M_{0(r)}$ from which the first encrypted message portion $[M_{1(R)}]$ was generated.

- The first masked decrypted message portion $M_{1(R)}'$ then forms the first MPP obfuscation function input, i.e. the first MPP obfuscation function $OF_{MPP,1}$ is applied to the first masked decrypted message portion $M_{1(R)}'$, to generate a first MPP obfuscated input. The first MPP obfuscated input has size R.

- The first MPP obfuscated input having size R is then combined with a first portion of the $P$th (i.e. final) ADPP output also having size R, using the XOR function. The output of the XOR function, having size R, is then concatenated with the second portion of the $P$th ADPP output having size C, to generate first intermediate MPP data.

- In order to ensure that the subsequent MPP outputs are identical to the MPP outputs which were generated and used during the corresponding encryption operation, it is necessary to ensure that the MPP function inputs are the same as the MPP function inputs which were used in the corresponding encryption operation. To generate the first MPP function input, the effects of the first mask $\mu_1$ must therefore be removed from the first intermediate MPP data. Accordingly, a first mask correction function is applied to the first intermediate MPP data to generate the first MPP function input, the first mask correction function configured to undo the effects of the first mask $\mu_1$, thereby restoring the first MPP function input from the first stage of the MPP of the corresponding cryptographic function that was used to generate the encrypted message. Applying the first mask correction function to the first intermediate MPP data may comprise the following:

[7] Using the associativity and commutativity properties of XOR functions, it is straightforward to show that, given that the first decrypted message portion is retrievable from an XOR combination of the first encrypted message portion with the, the result of an XOR combination between the first *masked* decrypted message portion and the $P$th ADPP output is equivalent to an XOR combination between the first mask and the decrypted message portion.

    ▪ Applying an inverse to the first MPP obfuscation function to the first intermediate MPP data to remove the effects of the first MPP obfuscation function, to generate first modified intermediate MPP data.

    ▪ Removing the first mask $\mu_1$ from the first modified intermediate MPP data, e.g. by combining the first modified intermediate MPP data with the first mask $\mu_1$ using an XOR function, to generate first unmasked intermediate MPP data.

    ▪ Reapplying the first MPP obfuscation function to the first unmasked intermediate MPP data to generate the first MPP function input. The first MPP obfuscation is reapplied to ensure that the first MPP function input is the same as it was when the encrypted message was generated using the MPP depicted in e.g. Fig. 9.

- It should be noted that in a variation of example (iii), the first mask correction function could be applied to the first masked decrypted message portion $M_{1(R)}'$

before the application of the first obfuscation function. In these cases, there is no need to apply the first mask correction function to the first intermediate MPP data.

- The first MPP input has size B = R + C.

- The first MPP function $f$ is then applied to the first MPP function input to generate a first MPP output, also having size B = R + C. The first MPP output may have a first portion having size R and a second portion having size C. As discussed, the MPP of the cryptographic function has $N$ stages, each having the same general structure. We now describe the operation of a general $n^{th}$ stage of the MPP of the cryptographic function.

- Firstly, the $n^{th}$ encrypted message portion $[M_{n(R)}]$, having size R, is combined with an $n^{th}$ mask $\mu_{n(R)}$ using an XOR function, to generate an $n^{th}$ masked encrypted message portion $[M_{n(R)}]'$, also having size R. This may alternatively be referred to as applying a $n^{th}$ mask $\mu_{n(R)}$ to the $n^{th}$ encrypted message portion $[M_{n(R)}]$.

- The $n^{th}$ masked encrypted message portion $[M_{n(R)}]'$, having size R, is then combined with the $(n\text{-}1)^{th}$ MPP output, also having size R, using an XOR function. The result of this XOR combination is an $n^{th}$ processed output data portion also having size R. The $n^{th}$ processed output data portion is an $n^{th}$ masked decrypted message portion denoted $M_{n(R)}'^8$, i.e. equivalent to what would be obtained by applying the $n^{th}$ mask $\mu_n$ to the $n^{th}$ decrypted message portion $M_{n(R)}$. In other words, by combining the $n^{th}$ masked encrypted message portion $[M_{n(R)}]'$ with the $(n\text{-}1)^{th}$ MPP output using an XOR function, it
$^8$ See footnote 3, also applies to the general $n^{th}$ case. is possible to retrieve a masked version of the original first message portion $M_{n(r)}$ from which the first encrypted message portion $[M_{n(r)}]$ was generated.

- The $n^{th}$ masked decrypted message portion $M_{n(R)}'$ then forms the $n^{th}$ MPP obfuscation function input, i.e. the $n^{th}$ MPP obfuscation function $OF_{MPP,n}$ is applied to the $n^{th}$ masked decrypted message portion $M_{n(R)}'$, to generate an $n^{th}$ MPP obfuscated input. The $n^{th}$ MPP obfuscated input has size R.

- The $n^{th}$ MPP obfuscated input having size R is then combined with a first portion of the $(n\text{-}1)^{th}$ MPP output also having size R, using the XOR function. The output of the XOR function, having size R, is then concatenated with the second portion of the $(n\text{-}1)^{th}$ MPP output having size C, to generate $n^{th}$ intermediate MPP data.

- In order to ensure that the subsequent MPP outputs are identical to the MPP outputs which were generated and used during the corresponding encryption operation, it is necessary to ensure that the MPP function inputs are the same as the MPP function inputs which were used in the corresponding encryption operation. To generate the $n^{th}$ MPP function input, the effects of the $n^{th}$ mask $\mu_n$ must therefore be removed from the $n^{th}$ intermediate MPP data. Accordingly, a $n^{th}$ mask correction function is applied to the $n^{th}$ intermediate MPP data to generate the $n^{th}$ MPP function input, the $n^{th}$ mask correction function configured to undo the effects of the $n^{th}$ mask $\mu_n$, thereby restoring the $n^{th}$ MPP function input from the $n^{th}$ stage of the MPP of the corresponding cryptographic function that was used to generate the encrypted message. Applying the $n^{th}$ mask correction function to the $n^{th}$ intermediate MPP data may comprise the following:

  ■ Applying an inverse to the $n^{th}$ MPP obfuscation function to the $n^{th}$ intermediate MPP data to remove the effects of the $n^{th}$ MPP obfuscation function, to generate $n^{th}$ modified intermediate MPP data.

  ■ Removing the first mask $\mu_n$ from the $n^{th}$ modified intermediate MPP data, e.g. by combining the $n^{th}$ modified intermediate MPP data with the $n^{th}$ mask $\mu_n$ using an XOR function, to generate $n^{th}$ unmasked intermediate MPP data.

  ■ Reapplying the $n^{th}$ MPP obfuscation function to the $n^{th}$ unmasked intermediate MPP data to generate the $n^{th}$ MPP function input. The $n^{th}$ MPP obfuscation is reapplied to ensure that the $n^{th}$ MPP function input is the same as it was when the encrypted message was generated using the MPP depicted in e.g. Fig. 9.

- It should be noted that in a variation of example (iii), the first mask correction function could be applied to the $n^{th}$ masked decrypted message portion $M_{n(R)}'$ before the application of the $n^{th}$ obfuscation function. In these cases, there is no need to apply the $n^{th}$ mask correction function to the $n^{th}$ intermediate MPP data.

- The $n^{th}$ MPP input has size B = R + C.

- The MPP function $f$ is then applied to the $n^{th}$ MPP function input to generate an $n^{th}$ MPP output, also having size B = R + C. The $n^{th}$ MPP output may have a first portion having size R and a second portion having size C.

The subsequent steps may depend on the nature of the message. In some cases, the masked decrypted message portions $M_{i(R)}'$ are transmitted to the external processing apparatus 400, whereupon the $n^{th}$

masked decrypted message portion $M_{n(R)}$' may be combined, using an XOR function with the respective $n^{th}$ mask $\mu_n$ to retrieve the $n^{th}$ decrypted message portion. The masks $\mu_n$ may be transmitted to the external processing apparatus 400 separately from the masked decrypted message portions $M_{i(R)}$' to reduce the chance that external attackers can retrieve them both.

**v. Tag generation phase**

The process of Fig. 4 then moves to step 408, the tag generation phase. Tag generation and authentication takes place in the same manner for each of examples (i), (ii), and (iii) described above, and takes place in the same manner as for the encryption operation, depicted in Fig. 10.

Each stage of the TGP includes a permutation function denoted f, which may be a Keccak-f or Keccak-p permutation function. Alternatively AES or SHA-2 may be used as pseudo-random permutation functions. Each stage of the TGP also includes an XOR function. There are no obfuscation functions in the TGP because no external data is received.

The first tag portion $T_1$ is the $N^{th}$ (i.e. final) MPP output.

In a first stage of the TGP, a first tag portion is output, which is the $N^{th}$ (i.e. final) MPP output. Then, the first TGP function $f$ is applied to the $N^{th}$ MPP output to generate a first TGP output.

In a general $q^{th}$ stage of the TGP, where $1 < q \leq Q$, the $(q\text{-}1)^{th}$ TGP is output as the $q^{th}$ tag portion $T_q$. Then, the $q^{th}$ TGP function is applied to the $(q\text{-}1)^{th}$ TGP. The $Q^{th}$ TGP output may also output as a tag portion $T_{Q+1}$.

After the stages of the TGP have been applied, the generated tag portions are then concatenated (denoted "||" in Fig. 10) to generate the authentication tag.

**vii. Output and authentication**

The process then proceeds to step 410 of Fig. 4, which may be referred to as an output phase. The nature of the output differs slightly depending on whether the MPP took the form of example (i), (ii), or (iii):

- In example (i), the $N$ decrypted message portions $M_{n(R)}$ generated in step 406 are concatenated.

- In example (ii), the $N$ masked decrypted message portions $M_{n(R)}$' generated in step 406 are concatenated.

- In example (iii), the $N$ masked decrypted message portions $M_{n(R)}$' generated in step 406 are concatenated. (Note that the $N$ masked decrypted message portions $M_{n(R)}$' are generated in a different manner in example (iii), relative to example (ii)).

The concatenated outputs are then output by the output module 10228 of the decryption module 1022 of the processor 102 in the secure environment 100.

This completes step 1102 of Fig. 11, which then proceeds to step 1104, in which the tag generated during the authentication tag generation phase is compared with the received reference authentication tag. In step 1106, it is determined whether the authentication tag matches the reference authentication tag. If not, in step 1108 a notification or alert may be generated that the encrypted message data may have been tampered with. This may be output via the output module 1024 of the processor 102.

If the authentication tag matches the reference authentication tag, additional processing/transmission takes place in step 1110. For example, the (masked) decrypted message may be transmitted, by the output module 1024 of the processor 102 in the secure environment 100, to the external processing apparatus 400 to be used to execute further operations (which may involve recovering the decrypted message by removing the mask), e.g. if the message was a cryptographic key. Alternatively, the decrypted message may be transmitted to the client device 200 by the output module 1024 of the processor 102 in the secure environment 100.

The decryption operation is thus completed.

<u>GENERAL STATEMENTS</u>

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A computer-implemented method, executed within a secure environment, the computer-implemented method comprising:

   receiving input data comprising a message, the message comprising N message portions, where N is greater than or equal to 1;
   initializing a cryptographic function by retrieving, selecting or generating initial state data, the cryptographic function comprising a message processing phase (MPP);
   applying a first stage of the MPP of the cryptographic function, wherein applying the first stage of the MPP of the cryptographic function comprises:

   applying a first MPP obfuscation function to a first MPP obfuscation function input to generate a first obfuscated MPP input, the first MPP obfuscation input derived from a received message portion; and
   applying a first MPP function to a first MPP function input derived from the first obfuscated MPP input and the initial state data of the encryption function to generate a first MPP output.

2. A computer-implemented method according to claim 1, wherein:
   the retrieved, selected or generated initial state data is retrieved, selected, or generated based on initialization data, the initialization data comprising or indicative of: one or more of the following: received associated data, an identity of a client from which a request is received; a type of input data; a time and/or date at which a request is received; access rights of a client from which a request is received; and/or a life cycle state of a device.

3. The computer-implemented method according to claim 2, further comprising:

   executing a search in a lookup table, the lookup table storing associations between initialization data and a plurality of sets of initial state data; and
   in response to identifying the initial state data based on the search, initializing the cryptographic function comprises retrieving the identified initial state data.

4. A computer-implemented method according to any one of claims 1 to 3, wherein:
   N is greater than 1; and the computer-implemented method further comprises:
   after applying the first stage of the MPP of the cryptographic function, applying a further ($N$-1) stages of the MPP of the cryptographic function, wherein for $1 < n \leq N$, applying an $n^{th}$ stage of the MPP of the cryptographic function comprises:

   applying an $n^{th}$ MPP obfuscation function to an $n^{th}$ MPP obfuscation function input to generate an $n^{th}$ obfuscated MPP input; and
   applying an $n^{th}$ MPP function to an $n^{th}$ MPP function input derived from the $m^{th}$ obfuscated MPP input and an ($n$-1)$^{th}$ MPP output, to generate an $n^{th}$ MPP output.

5. A computer-implemented method according to claim 4, further comprising generating processed output data comprising $N$ processed output data portions, wherein:

   a first processed output data portion is derived by applying a logical combination function to an MPP input derived from the initial state data and the first message portion; and
   an $n^{th}$ processed data output portion is derived by applying a logical combination function to a portion of an ($n$-1)$^{th}$ MPP output and an $n^{th}$ message portion.

6. A computer-implemented method according to any one of claims 1 to 5, wherein:
   the first to $n^{th}$ MPP obfuscation functions are bijective inversible obfuscation functions.

7. A computer-implemented method according claim 6, wherein:
   applying the first to $n^{th}$ MPP obfuscation functions comprises one or more of:

   applying a logical combination function to the respective obfuscation input and secret obfuscation data;
   applying a secret substitution table to the respective obfuscation input; and
applying a bit permutation function to the obfuscation input.

8. A computer-implemented method according to any one of claims 1 to 7, wherein the cryptographic function further comprises a cryptographic key processing phase, and the computer-implemented method further comprises:

receiving a cryptographic key comprising $M$ cryptographic key portions, where $M$ is greater than or equal to 1;
applying a first stage of the CKPP of the cryptographic function, wherein applying the first stage of the CKPP of the cryptographic function comprises:

applying a first CKPP obfuscation function to a first cryptographic key portion to generate a first obfuscated CKPP input; and applying a first CKPP function to a first CKPP function input derived from the first obfuscated CKPP input and the initial state data, to generate a first CKPP output; and

optionally, applying a further $(M - 1)$ stages of the CKPP of the cryptographic function, wherein for $1 < m \leq M$, applying an $m^{th}$ stage of the CKPP of the cryptographic function comprises:

applying an $m^{th}$ CKPP obfuscation function to an $m^{th}$ cryptographic key portion to generate an $m^{th}$ obfuscated CKPP input; and applying an $m^{th}$ CKPP function to an $m^{th}$ CKPP function input derived from the $m^{th}$ obfuscated CKPP input and an $(m-1)^{th}$ CKPP output, to generate an $m^{th}$ CKPP output.

9. A computer-implemented method according to any one of claims 1 to 8, wherein the cryptographic function further comprises a tag generation phase, and the computer-implemented method further comprises:

applying a first stage of the TGP of the cryptographic function, wherein applying the first stage of the TGP of the cryptographic function comprises:

outputting a first tag portion which comprises or is a portion the $N^{th}$ MPP output; and
applying a first TGP function to a first TGP function input derived from the $N^{th}$ MPP output to generate a first TGP output;

optionally, applying a further $(Q - 1)$ stages of the TGP of the cryptographic function, wherein $1 < q \leq Q$, applying the $q^{th}$ stage of the TGP of the cryptographic function comprises:

outputting a $q^{th}$ tag portion which comprises or is a portion of the $(q-1)^{th}$ TGP output; and
applying a $q^{th}$ TGP function to an input derived from the $(q-1)^{th}$ TGP output to derive a $q^{th}$ TGP output; and

concatenating at least the first to $q^{th}$ tag portions to generate an authentication tag.

10. A computer-implemented method according to any one of claims 1 to 9, wherein:

the computer-implemented method is for encrypting the received message and further comprises receiving, at the secure environment, a request to encrypt input data for storage outside the secure environment; and
each of the $N$ processed output data portions correspond to a respective encrypted message portion.

11. A computer-implemented method according to any one of claims 1 to 9, wherein:

the computer-implemented method is for decrypting data stored outside the secure environment and further comprises receiving, at the secure environment, a request to decrypt input data stored outside the secure environment;
each of the $N$ message portions are encrypted message portions of an encrypted message, the encrypted message being generated according to the computer-implemented method of claim 10; and
each of the $N$ processed output data portions correspond to a respective decrypted message portion, the decrypted message portion being the message portion which was encrypted using the method of claim 10 in order to obtain the encrypted message portion.

12. A computer-implemented method according to claim 11, further comprising:

generated masked first to $n^{th}$ encrypted message portions by applying respective first to $n^{th}$ cryptographic masks to the first to $n^{th}$ encrypted message portions; and
wherein:

the first MPP obfuscation function input is derived by applying a logical combination function to the masked first message portion and the initial state data or an output of an earlier phase of the cryptographic function;

the $n^{th}$ MPP obfuscation function input is derived by applying a logical combination function to the masked $n^{th}$ message portion and the $(n-1)^{th}$ MPP output.

13. A computer program or computer program product comprising instructions which, when executed by a computer, cause the computer to execute the computer-implemented method of any one of claims 1 to 12.

14. A system or device which is located or locatable in a secure environment, the system or device configured to execute the computer-implemented method of any one of claims 1 to 12.

Fig. 1

Encryption module 1020

Initialization module 10200

Cryptographic function application module 10202

Encrypted message generation submodule 10204

Authentication tag generation submodule 10206

Output module 10208

# Fig. 2A

Decryption module 1022

Initialization module 10220

Cryptographic function application module 10222

Encrypted message generation submodule 10224

Authentication submodule 10226

Output module 10228

# Fig. 2B

300 - Receive encryption request

302 - Apply cryptographic function to generate encrypted message and reference authentication tag

304 - Transmit encrypted message and authentication tag to external storage

306 - Store encrypted message and authentication tag in external storage.

**Fig. 3**

400 - Initialize cryptographic function

402 - Apply cryptographic key processing phase of cryptographic function.

404 - Apply associated data processing phase of cryptographic function.

406 - Apply message processing phase of cryptographic function.

408 - Apply tag generation phase of cryptographic function.

410 - Output encrypted/decrypted message and [reference] authentication tag.

Fig. 4

500 - Retrieve initialization data from request

502 - Perform lookup for initialization data in the lookup table.

504 - Retrieve initial state data based on lookup.

506 - Initialize cryptographic function using retrieved initial state data.

# Fig. 5

# Cryptographic key processing phase

Fig. 6

Bitrate: size R bits

Capacity: size C bits

Initial state data: size B bits

Fig. 7

# Associated data processing phase

CKPP output

$A_{1(R)}$ — 1st ADPP obfuscation function input

$OF_{ADPP,1}$ — 1st ADPP obfuscated input

$A_{p(R)}$ — $p^{th}$ ADPP obfuscation function input

$OF_{ADPP,p}$ — $p^{th}$ ADPP obfuscated input

R

C

XOR — ① 1st ADPP function $f$ — ②

XOR — ③ $p^{th}$ ADPP function $f$ — ④

1st ADPP output    $(p-1)^{th}$ ADPP output

$p^{th}$ ADPP output

To message processing phase

① First portion of 1st ADPP function input

② Second portion of 1st ADPP function input

③ First portion of $p^{th}$ ADPP function input

④ Second portion of $p^{th}$ ADPP function input

**Fig. 8**

EP 4 641 420 A1

# Message processing phase - encryption

1st processed output data portion — [M_{1(R)}]

n^{th} processed output data portion — [M_{n(R)}]

P^{th} ADPP output

XOR — M_{1(R)}

1st MPP obfuscation function input

1st MPP obfuscated input — OF_{MPP,1}

1st MPP function f

XOR

R

C

① First portion of 1st MPP function input

② Second portion of 1st MPP function input

n^{th} MPP obfuscation function input

n^{th} MPP obfuscated input — OF_{MPP,n}

n^{th} MPP function f

XOR — M_{n(R)}

1st MPP output

(n - 1)^{th} MPP output

n^{th} MPP output

To tag generation phase

③ First portion of n^{th} MPP function input

④ Second portion of n^{th} MPP function input

**Fig. 9**

# Tag generation phase

① First portion of 1st TGP function input

② Second portion of 1st TGP function input

③ First portion of $q^{th}$ TGP function input

④ Second portion of $q^{th}$ TGP function input

**Fig. 10**

1100 - Receive decryption request

1102 - Apply cryptographic function to generate decrypted message and authentication tag

1104 - Compare authentication tag with reference authentication tag

1106 - Does authentication tag match reference authentication tag?

1108 - Generate notification that message may have been tampered with.

1110 – Additional processing/transmission.

Fig. 11

# Message processing phase – decryption example (i)

EP 4 641 420 A1

(1) First portion of 1st MPP function input

(2) Second portion of 1st MPP function input

(3) First portion of $n^{th}$ MPP function input

(4) Second portion of $n^{th}$ MPP function input

Fig. 12

# Message processing phase – decryption example (ii)

① First portion of 1st MPP function input

② Second portion of 1st MPP function input

③ First portion of $n$th MPP function input

④ Second portion of $n$th MPP function input

**Fig. 13**

EP 4 641 420 A1

# Message processing phase – decryption example (iii)

Fig. 14

EP 4 641 420 A1

| | Europäisches Patentamt<br>European Patent Office<br>Office européen des brevets | **EUROPEAN SEARCH REPORT** | **Application Number**<br>EP 24 17 1942 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHRISTOPH DOBRAUNIG ET AL: "Generalized Initialization of the Duplex Construction",<br>IACR, INTERNATIONAL ASSOCIATION FOR CRYPTOLOGIC RESEARCH<br>,<br>vol. 20230613:145758<br>13 June 2023 (2023-06-13), pages 1-24,<br>XP061078296,<br>Retrieved from the Internet:<br>URL:https://eprint.iacr.org/archive/2023/924/1686668278.pdf<br>[retrieved on 2023-06-14]<br>* Section 3.1. *<br>* Section 4. *<br>* Section 6.1. *<br>* figure 3 *<br>----- | 1-14 | INV.<br>G06F21/60<br>G06F21/78<br>H04L9/06<br>H04L9/32 |
| X | BART MENNINK: "Understanding the Duplex and Its Security",<br>IACR, INTERNATIONAL ASSOCIATION FOR CRYPTOLOGIC RESEARCH<br>,<br>vol. 20230523:155115<br>23 May 2023 (2023-05-23), pages 1-46,<br>XP061077693,<br>Retrieved from the Internet:<br>URL:https://eprint.iacr.org/archive/2022/1340/1684857075.pdf<br>[retrieved on 2023-05-23]<br>* figure 9 *<br>* figure 11 *<br>* Section 3.1 *<br>* Section 9 *<br>----- | 1-14 | **TECHNICAL FIELDS SEARCHED (IPC)**<br><br>H04L<br>G06F |

-/--

The present search report has been drawn up for all claims

| Place of search | Date of completion of the search | Examiner |
|---|---|---|
| Munich | 25 September 2024 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 17 1942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/244434 A1 (PEDERSEN BRUCE B [US]) 30 July 2020 (2020-07-30)<br>* figure 5A *<br>* figure 7A *<br>* paragraph [0047] *<br>* paragraph [0052] *<br>* paragraph [0063] - paragraph [0070] *<br>* paragraph [0087] - paragraph [0089] *<br>----- | 1-14 | |
| | | | **TECHNICAL FIELDS SEARCHED (IPC)** |

The present search report has been drawn up for all claims

| Place of search | Date of completion of the search | Examiner |
|---|---|---|
| Munich | 25 September 2024 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 1942

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | Publication date |
|---|---|---|---|
| US 2020244434 A1 | 30-07-2020 | US 9331848 B1 | 03-05-2016 |
| | | US 10320554 B1 | 11-06-2019 |
| | | US 2020244434 A1 | 30-07-2020 |

EPO FORM P0459

For more details about this annex : see Official Journal of the European Patent Office, No. 12/82